(19) Europäisches Patentamt
European Patent Office
Office européen des brevets

(11) EP 3 498 736 B1

(12) EUROPEAN PATENT SPECIFICATION

(45) Date of publication and mention of the grant of the patent:
**15.06.2022 Bulletin 2022/24**

(21) Application number: **17839381.5**

(22) Date of filing: **04.08.2017**

(51) International Patent Classification (IPC):
***C08B 15/04*** *(2006.01)* ***B82Y 30/00*** *(2011.01)*
***C08B 15/06*** *(2006.01)* ***C08L 1/08*** *(2006.01)*
***C08L 101/00*** *(2006.01)* ***D06M 15/55*** *(2006.01)*
***D21H 11/20*** *(2006.01)* ***D21H 15/02*** *(2006.01)*

(52) Cooperative Patent Classification (CPC):
**C08B 15/06; B82Y 30/00; C08B 15/04; C08L 1/08; C08L 101/00; D06M 15/55; D21H 11/20; D21H 15/02**

(86) International application number:
**PCT/JP2017/028459**

(87) International publication number:
**WO 2018/030310 (15.02.2018 Gazette 2018/07)**

# (54) MICRO CELLULOSE FIBER COMPLEX

MIKROCELLULOSEFASERKOMPLEX

COMPLEXE DE MICROFIBRE CELLULOSIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.08.2016 JP 2016156760**

(43) Date of publication of application:
**19.06.2019 Bulletin 2019/25**

(73) Proprietor: **Kao Corporation**
**Chuo-ku**
**Tokyo 103-8210 (JP)**

(72) Inventors:
- **YAMATO, Kyohei**
  **Wakayama 640-8580 (JP)**
- **YOSHIDA, Yutaka**
  **Wakayama 640-8580 (JP)**

(74) Representative: **Hoffmann Eitle**
**Patent- und Rechtsanwälte PartmbB**
**Arabellastraße 30**
**81925 München (DE)**

(56) References cited:
**EP-A1- 2 511 346**
**EP-A1- 2 799 491**
**EP-A1- 3 088 422**
**WO-A1-2013/099770**
**JP-A- 2009 057 552**
**JP-A- 2009 197 122**
**JP-A- 2011 140 738**
**JP-A- 2012 021 081**
**JP-A- 2013 060 570**
**JP-A- 2013 082 796**
**JP-A- 2013 151 661**
**JP-A- 2013 216 998**
**JP-A- 2014 034 616**
**JP-A- 2014 125 607**
**JP-A- 2015 000 934**
**JP-A- 2015 000 935**
**JP-A- 2015 007 196**
**JP-A- 2015 143 336**
**JP-A- 2015 143 337**

EP 3 498 736 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### FIELD OF THE INVENTION

The present invention relates to a fine cellulose fiber composite. More specifically, the present invention relates to a fine cellulose fiber composite which can be suitably blended as a nanofiller in daily sundries, household electric appliance parts, automobile parts, and the like, and a resin composition containing the fine cellulose fiber composite. Further, the present invention relates to a resin molded article obtained by molding the resin composition.

### BACKGROUND OF THE INVENTION

Conventionally, plastic materials derived from limited resource petroleum have been widely used; however, in the recent years, techniques with less burdens on the environment have been spotlighted. In view of the technical background, materials using cellulose fibers, which are biomass existing in nature in large amounts have been remarked.

For example, it has been reported in Patent Publication 1 that a fine cellulose fiber composite to which a surfactant is adsorbed is blended with various resins, thereby obtaining a composite material having both high mechanical strength and transparency.

Patent Publication 1: Japanese Patent Laid-Open No. 2011-140738 EP 3 088 422, EP 2 799 491, EP 2 511 346 and JP 2013-151661 describe fine cellulose fiber composites containing cellulose fibers comprising a carboxy group in an amount of 0.1 mmol/g or more, wherein a modifying compound is bound to the carboxy group by covalent or ionic interaction.

### SUMMARY OF THE INVENTION

The present invention relates to the following [1] to [3]:

[1] A fine cellulose fiber composite in which a modifying group is bound to a carboxy group of fine cellulose fibers, wherein the modifying group is a hydrocarbon group and/or a copolymer moiety, the fine cellulose fibers having a carboxy group content of 0.1 mmol/g or more, wherein the fine cellulose fiber composite has an average aspect ratio of 1 or more and 100 or less.
[2] A resin composition containing a resin and a fine cellulose fiber composite as defined in the above [1].
[3] A resin molded article obtainable by applying extrusion molding, injection molding, press molding, casting molding or solvent casting to a resin composition as defined in the above [2].

### DETAILED DESCRIPTION OF THE INVENTION

In the conventional composite materials, further improvements in heat resistance have been desired in the applications for various molded articles for household electric appliance parts, automobile parts, electronic materials, and the like.

The present invention relates to a fine cellulose fiber composite capable of providing a resin composition having excellent heat resistance when blended with various resins, and a resin composition containing the composite. Further, the present invention relates to a resin molded article obtainable by molding the resin composition.

As a result of intensive studies in order to solve the above problems, the present inventors have found that by mixing a fine cellulose fiber composite having a specified aspect ratio with various resins, the resin composition obtained has excellent heat resistance, and the present invention has been perfected thereby.

The fine cellulose fiber composite of the present invention can provide a resin composition having excellent heat resistance when blended with various resins.

[Fine Cellulose Fiber Composite]

In the fine cellulose fiber composite of the present invention, a modifying group described later is bound to a carboxy group in the carboxy group-containing fine cellulose fibers, wherein the fine cellulose fiber composite has a specified aspect ratio.

Conventional fine cellulose fiber composites are produced by subjecting fine cellulose fibers having an average aspect ratio of usually 300 or so to a treatment of composite formation such as binding various modifying groups to the fine cellulose fibers, and the composite has been found to have insufficient heat resistance even while the effects by the modifying groups are excellent. On the other hand, the inventors of the present application have found that the composite can serve as a material also having heat resistance without impairing the effects with the modifying groups

when the composite having a modifying group has a specified average aspect ratio. Although the detailed reasons in which such effects are exhibited are not elucidated, the fine cellulose fiber composite having an average aspect ratio falling within the above range contains brittle parts that exist in natural cellulose fibers, for example, those in which amorphous regions are cut into shorter fibers, so that it is assumed that the distribution proportion of the crystalline region is increased as a whole, thereby having excellent heat resistance. In addition, since the fiber length of the composite obtained is short, it is considered that the dispersibility in the resin composition is improved, so that the effects as a filler are fully exhibited, so that the improved effects in heat resistance are even more increased while having excellent mechanical strength.

< Fine Cellulose Fibers >

(Carboxy Group Content)

The carboxy group content of the fine cellulose fibers constituting the fine cellulose fiber composite of the present invention is 0.1 mmol/g or more, and the carboxy group content is preferably 0.4 mmol/g or more, more preferably 0.6 mmol/g or more, and even more preferably 0.8 mmol/g or more, from the viewpoint of allowing to stably finely fibrillate, and introducing a modifying group. In addition, the carboxy group content is preferably 3 mmol/g or less, more preferably 2 mmol/g or less, even more preferably 1.8 mmol/g or less, even more preferably 1.5 mmol/g or less, and even more preferably 1.2 mmol/g or less, from the viewpoint of improving handling property. Here, the term "carboxy group content" means a total amount of carboxy groups in the celluloses constituting the fine cellulose fibers, and specifically measured in accordance with a method described in Examples set forth below.

(Average Fiber Diameter)

The average fiber diameter of the fine cellulose fibers constituting the fine cellulose fiber composite of the present invention is preferably 0.1 nm or more, more preferably 0.5 nm or more, even more preferably 1 nm or more, even more preferably 2 nm or more, and still even more preferably 3 nm or more, from the viewpoint of including the composite in the resin, thereby improving heat resistance and mechanical strength when formed into a resin composition. Also, the average fiber diameter is preferably 100 nm or less, more preferably 50 nm or less, even more preferably 20 nm or less, even more preferably 10 nm or less, even more preferably 6 nm or less, and still even more preferably 5 nm or less, from the viewpoint of including the composite in the resin, thereby improving heat resistance when formed into a resin composition.

(Average Fiber Length)

The length of the fine cellulose fibers constituting the fine cellulose fiber composite of the present invention (average fiber length) is preferably 150 nm or more, and more preferably 200 nm or more, from the viewpoint of including the composite in the resin, thereby improving heat resistance when formed into a resin composition. Also, the average fiber length is preferably 1,000 nm or less, more preferably 750 nm or less, even more preferably 500 nm or less, and even more preferably 400 nm or less, from the viewpoint of including the composite in the resin, thereby improving heat resistance when formed into a resin composition.

(Average Aspect Ratio)

In addition, since the fine cellulose fiber composite of the present invention has a specified average aspect ratio, it is preferable that the constituting fine cellulose fibers also have the same level of average aspect ratio. The average aspect ratio (fiber length/fiber diameter) of the fine cellulose fibers is preferably 1 or more, more preferably 10 or more, even more preferably 20 or more, even more preferably 40 or more, and even more preferably 50 or more, from the viewpoint of including the composite in the resin, thereby improving heat resistance when formed into a resin composition. The average aspect ratio is preferably 150 or less, more preferably 140 or less, even more preferably 130 or less, even more preferably 100 or less, even more preferably 95 or less, and even more preferably 90 or less, from the viewpoint of including the composite in the resin, thereby improving heat resistance and mechanical strength when formed into a resin composition. In addition, when the average aspect ratio is within the range defined above, the standard deviation of the aspect ratio is preferably 60 or less, more preferably 50 or less, and even more preferably 45 or less, from the viewpoint of including the composite in the resin, thereby improving heat resistance when formed into a resin composition. Although the lower limit is not particularly set, the standard deviation is preferably 4 or more, from the viewpoint of economic advantages. Here, the average fiber diameter and the average fiber length of the cellulose fibers as used herein can be measured with an atomic force microscope (AFM), and the average aspect ratio can be calculated

by average fiber length/average fiber diameter. Specifically, the average fiber diameter, the average fiber length, and the average aspect ratio can be measured in accordance with a method described in Examples set forth below. Generally, a minimum unit of cellulose nanofibers prepared from higher plants is packed in nearly square form having sizes of 6 × 6 molecular chains, so that the height analyzed in the image according to the AFM can be assumed to be a width of the fibers.

(Crystallinity)

The crystallinity of the fine cellulose fibers is preferably 30% or more, more preferably 35% or more, even more preferably 40% or more, and still even more preferably 45% or more, from the viewpoint of including the composite in the resin, thereby improving heat resistance when formed into a resin composition. In addition, the crystallinity is preferably 95% or less, more preferably 90% or less, even more preferably 85% or less, and still even more preferably 80% or less, from the viewpoint of improving reaction efficiency. The crystallinity of the cellulose as used herein is a cellulose I crystallinity calculated according to Segal method from diffraction intensity values according to X-ray diffraction method, which is defined by the following calculation formula (A):

$$\text{Cellulose I Crystallinity (\%)} = [(I22.6 - I18.5)/I22.6] \times 100 \qquad (A)$$

wherein 122.6 is a diffraction intensity of a lattice face (002 face)(angle of diffraction 2θ = 22.6°), and 118.5 is a diffraction intensity of an amorphous portion (angle of diffraction 2θ = 18.5°), in X-ray diffraction. Here, cellulose I is a crystalline form of a natural cellulose, and the cellulose I crystallinity means a proportion of the amount of crystalline region that occupies the entire cellulose.

As the fine cellulose fibers, known ones may be used, or those that are separately prepared may be used. For example, by subjecting cellulose fibers previously subjected to oxidation treatment of including (introducing) a carboxy group to natural cellulose fibers to a known treatment, for example, at least one treatment selected from biochemical treatment, chemical treatment, and mechanical treatment, fine cellulose fibers having a low aspect ratio can be obtained. The treatment for making a low aspect ratio as defined above is also referred to as a treatment of lowering an aspect ratio. The fine cellulose fibers may be those obtained by a known finely fibrillating treatment, so long as the treatment of composite formation described later can be carried out, and the fine cellulose fibers may not have a low aspect ratio defined above. The term "low aspect ratio" as used herein refers to an aspect ratio of 150 or less, and the term "high aspect ratio" is an aspect ratio of greater than 150.

The method for introducing a carboxy group to natural cellulose fibers includes a method including converting a hydroxyl group of a cellulose to a carboxy group by oxidation; and a method including reacting a hydroxyl group of a cellulose with at least one member selected from the group consisting of a compound having a carboxy group, an acid anhydride of a compound having a carboxy group, and derivatives thereof.

The method of oxidizing a hydroxyl group of a cellulose mentioned above is not particularly limited, and specific examples include a method including using an N-oxyl compound as an oxidation catalyst, and treating the compound with a co-oxidizing agent, and a method including heating the cellulose at a high temperature of 100°C or higher, as described later.

The compound having a carboxy group mentioned above is not particularly limited. Specific examples include halogenated acetic acids, and the halogenated acetic acid includes chloroacetic acid and the like.

The acid anhydride of a compound having a carboxy group, and derivatives thereof mentioned above are not particularly limited, which include acid anhydrides of dicarboxylic acid compounds such as maleic anhydride, succinic anhydride, phthalic anhydride, and adipic anhydride; imidation products of the acid anhydrides of a compound having a carboxy group; and derivatives of the acid anhydrides of a compound having a carboxy group.

In the present invention, the method for introducing a carboxy group to natural cellulose fibers is excellent in selectivity of a hydroxyl group on the fiber surface, and the reaction conditions are also mild, so that a method of oxidizing a hydroxyl group of a cellulose is preferred. In particular, as described later, a method including using an N-oxyl compound as an oxidation catalyst and treating the compound with a co-oxidizing agent is even more preferred.

The treatment of lowering an aspect ratio can be specifically accomplished by, for example, one or more known methods of acid hydrolysis, hydrothermal decomposition, oxidation decomposition, mechanical treatment, enzyme treatment, an alkali treatment, UV treatment, and electronic beam treatment, and particularly, the low aspect ratio can be obtained by preferably one kind alone or a combination of two or more kinds of acid hydrolysis, hydrothermal decomposition, and mechanical treatment, more preferably one kind alone or in a combination of two or more kinds of acid hydrolysis and hydrothermal decomposition, and even more preferably acid hydrolysis. Here, after the treatment of lowering an aspect ratio, when the fine fibrillation of the cellulose fibers is not sufficient, a further known finely fibrillating treatment can be carried out. As a treatment example of lowering an aspect ratio, the treatment method in acid hydrolysis,

hot water treatment, and mechanical treatment will be explained hereinbelow.

In the treatment of acid hydrolysis, specifically, an acid is contacted with raw material cellulose fibers to cleave a glycoside bond in the cellulose. It is preferable that the acid to be contacted is sulfuric acid, hydrochloric acid, nitric acid, phosphoric acid, acetic acid, citric acid, or the like.

The treatment conditions for the acid hydrolysis can be appropriately set so long as the conditions are such that a glycoside bond of the cellulose is allowed to cleave with an acid, which are not particularly limited. For example, when it is assumed that the absolute dry mass of the raw material cellulose fibers is 100 parts by mass, the amount of the acid is preferably 0.01 parts by mass or more, more preferably 1 part by mass or more, and even more preferably 10 parts by mass or more, from the viewpoint of lowering an aspect ratio of the cellulose, and the amount is preferably 400 parts by mass or less, from the viewpoint of economic advantages and improvements in yields. The solution pH during the treatment is preferably 4 or less, more preferably 2 or less, and even more preferably 1 or less, from the viewpoint of lowering an aspect ratio of the cellulose. Also, the treatment temperature is preferably 80°C or higher, and more preferably 90°C or higher, and preferably 120°C or lower, and more preferably 110°C or lower, from the viewpoint of lowering an aspect ratio of the cellulose. In addition, the treatment time is preferably 0.1 hours or more, and preferably 5 hours or less, and more preferably 3 hours or less, from the viewpoint of lowering an aspect ratio of the cellulose.

In the treatment of hydrothermal decomposition, an embodiment of immersing raw material cellulose fibers in water, and heating the immersed cellulose fibers is preferred.

The temperature of the hydrothermal decomposition is preferably 70°C or higher, more preferably 100°C or higher, and even more preferably 140°C or higher, from the viewpoint of lowering an aspect ratio of the cellulose. In addition, the temperature is preferably 250°C or lower, more preferably 200°C or lower, and even more preferably 180°C or lower, from the viewpoint of lowering an aspect ratio of the cellulose and preventing degradation. In addition, the pressure during the treatment is preferably 0.1 MPa [gage] or more, more preferably 0.2 MPa [gage] or more, and even more preferably 0.3 MPa [gage] or more, and preferably 10 MPa [gage] or less, more preferably 5 MPa [gage] or less, and even more preferably 3 MPa [gage] or less, from the viewpoint of lowering an aspect ratio of the cellulose. In addition, the treatment time is preferably 15 minutes or more, and more preferably 1 hour or more, and preferably 4 hours or less, and more preferably 2 hours or less, from the viewpoint of lowering an aspect ratio of the cellulose.

The mechanical treatment includes a pulverization treatment, and the machines used are, for example, preferably vessel driving medium mills such as planetary ball-mills and rod mills, more preferably vibration mills, and even more preferably vibration rod mill, from the viewpoint of treatment efficiency. In addition, the treatment time, which may depend upon the size of the machines used, is preferably 5 minutes or more, more preferably 10 minutes or more, and even more preferably 15 minutes or more, from the viewpoint of lowering an aspect ratio of the cellulose, and the treatment time is preferably 12 hours or less, more preferably 4 hours or less, and even more preferably 1 hour or less, from the viewpoint of economic advantages.

After the treatment such as acid hydrolysis, it is preferable to carry out a known finely fibrillating treatment.

< Modifying Group >

The fine cellulose fiber composite of the present invention shows that a modifying group, which is a hydrocarbon group and/or a copolymer moiety, is bound to the surface of the the fine cellulose fibers mentioned above, and this bonding is obtained by ionically bonding and/or covalently bonding a compound having a modifying group to a carboxy group which is already existing on the fine cellulose fiber surface. The binding form to the carboxy group includes ionic bonding and covalent bonding. The covalent bonding used herein includes, for example, amide bonding, ester bonding, and urethane bonding, among which amide bonding are preferred, from the viewpoint of obtaining a resin composition having excellent heat resistance. Accordingly, it is preferable that the fine cellulose fiber composite of the present invention is obtained by ionically bonding and/or amide-bonding a compound having a modifying group to a carboxy group already existing on the fine cellulose fiber surface, from the viewpoint of obtaining a resin composition having excellent heat resistance.

(Compound Having Modifying Group)

The compound having a modifying group may be any of those having a modifying group described later, and, for example, the following compounds can be used, depending upon the binding forms. In the case of ionic bonding, the compound may be any one of primary amines, secondary amines, tertiary amines, quaternary ammonium compounds, and phosphonium compounds. Among them, preferred are primary amines, secondary amines, tertiary amines, and quaternary ammonium compounds, from the viewpoint of dispersibility. In addition, an anionic component for the above ammonium compound or phosphonium compound includes, for example, preferably halogen ions such as chlorine ions and bromine ions, hydrogensulfate ions, perchlorate ions, tetrafluoroborate ions, hexafluorophosphate ions, trifluoromethanesulfonate ions, and hydroxy ions, and more preferably hydroxy ions, from the viewpoint of reactivity. In the

case of covalent bonding, the following compounds can be used depending upon the substituted functional groups. In the modification to the carboxy group, in the case of an amide bonding, the compound may be any one of primary amines and secondary amines. In the case of ester bonding, an alcohol is preferred, which includes, for example, butanol, octanol, and dodecanol. In the case of urethane bonding, an isocyanate compound is preferred.

As the modifying group in the present invention, a hydrocarbon group and/or a copolymer moiety is used. These modifying groups may be introduced to the fine cellulose fibers, alone or in a combination of two or more kinds. A fine cellulose fiber composite in which preferably two or more modifying groups are introduced to the fine cellulose fibers is desired, from the viewpoint of accomplishing the desired effects.

(Hydrocarbon Group)

The hydrocarbon group includes, for example, chained saturated hydrocarbon groups, chained unsaturated hydrocarbon groups, cyclic saturated hydrocarbon groups, and aromatic hydrocarbon groups, and it is preferable that the hydrocarbon group is chained saturated hydrocarbon groups, cyclic saturated hydrocarbon groups, and aromatic hydrocarbon groups, from the viewpoint of inhibiting side reactions, and from the viewpoint of stability.

The chained saturated hydrocarbon group may be linear or branched. The number of carbon atoms of the chained saturated hydrocarbon group is preferably 1 or more, more preferably 2 or more, even more preferably 3 or more, even more preferably 6 or more, and even more preferably 8 or more, from the viewpoint of including the composite in the resin, thereby improving heat resistance when formed into a resin composition. In addition, the number of carbon atoms is preferably 30 or less, more preferably 24 or less, even more preferably 18 or less, and still even more preferably 16 or less, from the same viewpoint. Here, the number of carbon atoms of the hydrocarbon group hereinafter means a total number of carbon atoms as an entirety of a modifying group.

Specific examples of the chained saturated hydrocarbon group include, for example, a methyl group, an ethyl group, a propyl group, an isopropyl group, a butyl group, a sec-butyl group, a tert-butyl group, an isobutyl group, a pentyl group, a tert-pentyl group, an isopentyl group, a hexyl group, an isohexyl group, a heptyl group, an octyl group, a 2-ethylhexyl group, a nonyl group, a decyl group, a dodecyl group, a tridecyl group, a tetradecyl group, an octadecyl, a docosyl group, an octacosanyl group, and the like, and preferred are a propyl group, an isopropyl group, a butyl group, a sec-butyl group, a tert-butyl group, an isobutyl group, a pentyl group, a tert-pentyl group, an isopentyl group, a hexyl group, an isohexyl group, a heptyl group, an octyl group, a 2-ethylhexyl group, a nonyl group, a decyl group, a dodecyl group, a tridecyl group, a tetradecyl group, an octadecyl, a docosyl group, and an octacosanyl group, from the viewpoint of including the composite in the resin, thereby improving heat resistance when formed into a resin composition. These chained saturated hydrocarbon groups may be introduced alone or in a given proportion of two or more kinds.

The chained unsaturated hydrocarbon group may be linear or branched. The number of carbon atoms of the chained unsaturated hydrocarbon group is preferably 1 or more, more preferably 2 or more, and even more preferably 3 or more, from the viewpoint of handling property. In addition, the number of carbon atoms is preferably 30 or less, more preferably 18 or less, even more preferably 12 or less, and still even more preferably 8 or less, from the viewpoint of easy availability.

Specific examples of the chained unsaturated hydrocarbon group include, for example, an ethylene group, a propylene group, a butene group, an isobutene group, an isoprene group, a pentene group, a hexene group, a heptene group, an octene group, a nonene group, a decene group, a dodecene group, a tridecene group, a tetradecene group, and an octadecene group, and preferred are an ethylene group, a propylene group, a butene group, an isobutene group, an isoprene group, a pentene group, a hexene group, a heptene group, an octene group, a nonene group, a decene group, and a dodecene group, from the viewpoint of compatibility with the resin. These chained unsaturated hydrocarbon groups may be introduced alone or in a given proportion of two or more kinds.

The number of carbon atoms of the cyclic saturated hydrocarbon group is preferably 3 or more, more preferably 4 or more, and even more preferably 5 or more, from the viewpoint of handling property. In addition, the number of carbon atoms is preferably 20 or less, more preferably 16 or less, even more preferably 12 or less, and still even more preferably 8 or less, from the viewpoint of easy availability.

Specific examples of the cyclic saturated hydrocarbon group include, for example, a cyclopropane group, a cyclobutyl group, a cyclopentane group, a cyclohexyl group, a cycloheptyl group, a cyclooctyl group, a cyclononyl group, a cyclodecyl group, a cyclododecyl group, a cyclotridecyl group, a cyclotetradecyl group, a cyclooctadecyl group, and the like, and preferred are a cyclopropane group, a cyclobutyl group, a cyclopentane group, a cyclohexyl group, a cycloheptyl group, a cyclooctyl group, a cyclononyl group, a cyclodecyl group, and a cyclododecyl group, from the viewpoint of compatibility with the resin. These cyclic saturated hydrocarbon groups may be introduced alone or in a given proportion of two or more kinds.

The aromatic hydrocarbon groups are, for example, selected from the group consisting of aryl groups and aralkyl groups. As the aryl group and the aralkyl group, those groups in which the aromatic ring moiety is substituted or unsubstituted may be used.

A total number of carbon atoms of the above aryl group is preferably 6 or more, and a total number of carbon atoms is preferably 24 or less, more preferably 20 or less, even more preferably 14 or less, even more preferably 12 or less, and even more preferably 10 or less, from the viewpoint of compatibility with the resin.

A total number of carbon atoms of the above aralkyl group is 7 or more, and a total number of carbon atoms is preferably 8 or more, from the viewpoint of compatibility with the resin. Also, a total number of carbon atoms is preferably 24 or less, more preferably 20 or less, even more preferably 14 or less, even more preferably 13 or less, and even more preferably 11 or less, from the same viewpoint.

The aryl group includes, for example, a phenyl group, a naphthyl group, an anthryl group, a phenanthryl group, a biphenyl group, a triphenyl group, a terphenyl group, and groups in which these groups are substituted with a substituent given later, and these aryl groups may be introduced alone or in a given proportion of two or more kinds. Among them, a phenyl group, a biphenyl group, and a terphenyl group are preferred, from the viewpoint of compatibility with the resin.

The aralkyl group includes, for example, a benzyl group, a phenethyl group, a phenylpropyl group, a phenylpentyl group, a phenylhexyl group, a phenylheptyl group, a phenyloctyl group, and groups in which these groups are substituted with a substituent given later, and these aralkyl groups may be introduced alone or in a given proportion of two or more kinds. Among them, a benzyl group, a phenethyl group, a phenylpropyl group, a phenylpentyl group, a phenylhexyl group, and a phenylheptyl group are preferred, from the viewpoint of compatibility with the resin.

As the primary amine, the secondary amine, the tertiary amine, the quaternary ammonium compound, and the phosphonium compound, each having the above hydrocarbon group, acid anhydrides, and the isocyanate compound, commercially available products can be used, or the compound can be prepared in accordance with a known method.

Specific examples of the primary to tertiary amines include, for example, ethylamine, diethylamine, triethylamine, propylamine, dipropylamine, butylamine, dibutylamine, hexylamine, dihexylamine, octylamine, dioctylamine, trioctylamine, dodecylamine, didodecylamine, stearylamine, distearylamine, monoethanolamine, diethanolamine, triethanolamine, aniline, benzylamine, octadecylamine, and dimethylbehenylamine. The quaternary ammonium compound includes, for example, tetramethylammonium hydroxide (TMAH), tetraethylammonium hydroxide (TEAH), tetraethylammonium chloride, tetrapropylammonium hydroxide (TPAH), tetrabutylammonium hydroxide (TBAH), tetrabutylammonium chloride, lauryltrimethylammonium chloride, dilauryldimethyl chloride, stearyltrimethylammonium chloride, distearyldimethylammonium chloride, cetyltrimethylammonium chloride, and alkylbenzyldimethylammonium chlorides. Among them, preferred are propylamine, dipropylamine, butylamine, dibutylamine, hexylamine, dihexylamine, octylamine, dioctylamine, trioctylamine, dodecylamine, didodecylamine, distearylamine, tetraethylammonium hydroxide (TEAH), tetrabutylammonium hydroxide (TBAH), tetrapropylammonium hydroxide (TPAH), aniline, octadecylamine, and dimethylbehenylamine, and more preferred are propylamine, dodecylamine, tetrabutylammonium hydroxide (TBAH), aniline, octadecylamine, and dimethylbehenylamine, from the viewpoint of dispersibility and heat resistance.

The average binding amount of the hydrocarbon group in the fine cellulose fiber composite, based on the above fine cellulose fibers, is preferably 0.01 mmol/g or more, more preferably 0.05 mmol/g or more, even more preferably 0.1 mmol/g or more, even more preferably 0.3 mmol/g or more, and even more preferably 0.5 mmol/g or more, from the viewpoint of including the composite in the resin, thereby improving heat resistance when formed into a resin composition. The average binding amount is preferably 3 mmol/g or less, more preferably 2.5 mmol/g or less, even more preferably 2 mmol/g or less, even more preferably 1.8 mmol/g or less, and even more preferably 1.5 mmol/g or less, from the viewpoint of reactivity. Here, even in a case where a hydrocarbon group selected from the chained saturated hydrocarbon groups, the chained unsaturated hydrocarbon groups, and the cyclic saturated hydrocarbon groups is introduced simultaneously with an aromatic hydrocarbon group, it is preferable that an individual average binding amount is within the range defined above.

In addition, the introduction ratio of the hydrocarbon group for any modifying group is preferably 10% or more, more preferably 30% or more, even more preferably 50% or more, even more preferably 60% or more, and even more preferably 70% or more, from the viewpoint of obtaining a resin composition having excellent heat resistance, and the introduction ratio is preferably 99% or less, more preferably 97% or less, even more preferably 95% or less, and even more preferably 90% or less, from the viewpoint of reactivity. Here, in a case where a hydrocarbon group selected from the chained saturated hydrocarbon groups, the chained unsaturated hydrocarbon groups, and the cyclic saturated hydrocarbon groups is introduced simultaneously with an aromatic hydrocarbon group, it is preferable that the introduction ratio is within the range defined above so long as a total of the introduction ratios is within the range that does not exceed the upper limit of 100%.

(Copolymer Moiety)

In the present invention, as the copolymer moiety, for example, an ethylene oxide/propylene oxide (EO/PO) copolymer moiety or the like can be used. Here, the EO/PO copolymer moiety means a structure in which ethylene oxides (EO) and propylene oxides (PO) are polymerized in a random or block form. For example, when an amine having an EO/PO copolymer moiety is represented by the formula (i) given later, the ethylene oxides (EO) and the propylene

oxides (PO) form a chain structure of a random or block form, and when an amine has a structure represented by the formula (ii) given later, (EO)a(PO)b, (EO)c(PO)d, and (EO)e(PO)f do not need to be in chain form.

The PO content ratio (% by mol) in the EO/PO copolymer moiety is preferably 1% by mol or more, more preferably 5% by mol or more, even more preferably 7% by mol or more, and even more preferably 10% by mol or more, from the viewpoint of obtaining a resin composition having excellent heat resistance. The content ratio is preferably 100% by mol or less, more preferably 90% by mol or less, even more preferably 85% by mol or less, even more preferably 75% by mol or less, even more preferably 60% by mol or less, even more preferably 50% by mol or less, even more preferably 40% by mol or less, and even more preferably 30% by mol or less, from the same viewpoint. Here, the content ratio of PO of 100% by mol refers that the EO/PO copolymer moiety is constituted by PO alone, and it is acceptable that a PO polymer moiety is introduced in the present invention.

The molecular weight of the EO/PO copolymer moiety is preferably 500 or more, more preferably 1,000 or more, and even more preferably 1,500 or more, from the viewpoint of obtaining a resin composition having excellent heat resistance, and the molecular weight is preferably 10,000 or less, more preferably 7,000 or less, even more preferably 5,000 or less, even more preferably 4,000 or less, even more preferably 3,500 or less, and even more preferably 2,500 or less, from the same viewpoint. For example, in a case of an amine having a structure represented by the formula (ii) given later, a total of the molecular weights of (EO)a(PO)b+(EO)c(PO)d+(EO)e(PO)f is defined as a molecular weight of the EO/PO copolymer moiety. The PO content ratio (% by mol) of the EO/PO copolymer moiety and the molecular weight of the EO/PO copolymer moiety can be obtained by calculating from an average number of moles added when an amine is produced.

It is preferable that the EO/PO copolymer moiety and the amine are bound directly or via a linking group. The linking group is preferably a hydrocarbon group, and an alkylene group having the number of carbon atoms of preferably from 1 to 6, and more preferably from 1 to 3, is used. For example, an ethylene group or a propylene group is preferred.

The amine having an EO/PO copolymer moiety includes, for example, a compound represented by the following formula (i):

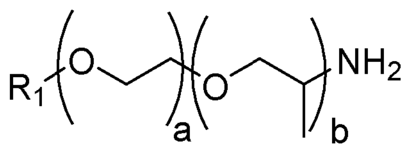

(i)

wherein $R_1$ is a hydrogen atom, a linear or branched alkyl group having from 1 to 6 carbon atoms, a $-CH_2CH(CH_3)NH_2$ group, or a group represented by the following formula (ii); EO and PO are present in a random or block form; **a** is a positive number showing an average number of moles of EO added; and **b** is a positive number showing an average number of moles of PO added,
wherein the formula (ii) is:

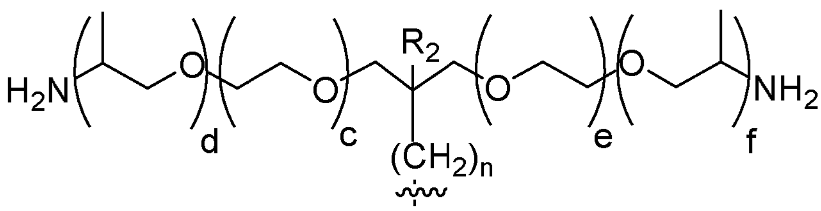

(ii)

wherein n is 0 or 1; $R_2$ is a phenyl group, a hydrogen atom, or a linear or branched alkyl group having from 1 to 3 carbon atoms; EO and PO are present in a random or block form; **c** and **e** show an average number of moles of EO added, which is independently a number of from 0 to 50; and **d** and **f** show an average number of moles of PO added, which is independently a number of from 1 to 50.

**a** in the formula (i) shows an average number of moles of EO added, and it is preferably 11 or more, more preferably 15 or more, even more preferably 20 or more, even more preferably 25 or more, and even more preferably 30 or more, from the viewpoint of obtaining a resin composition having excellent heat resistance, and it is preferably 100 or less, more preferably 70 or less, even more preferably 60 or less, even more preferably 50 or less, and even more preferably 40 or less, from the same viewpoint.

**b** in the formula (i) shows an average number of moles of PO added, and it is preferably 1 or more, more preferably 3 or more, and even more preferably 5 or more, from the viewpoint of obtaining a resin composition having

excellent heat resistance, and it is preferably 50 or less, more preferably 40 or less, even more preferably 30 or less, even more preferably 25 or less, even more preferably 20 or less, even more preferably 15 or less, and even more preferably 10 or less, from the same viewpoint.

In addition, as to the PO content ratio (% by mol) in the EO/PO copolymer moiety, when an amine is represented by the formula (i) defined above, the PO content ratio in the copolymer moiety can be calculated from **a** and **b** mentioned above, which can be obtained by the formula: $\mathbf{b} \times 100/(\mathbf{a} + \mathbf{b})$. When an amine is represented by the formula (i) and the formula (ii) defined above, the content ratio can be similarly calculated by the formula: $(\mathbf{b} + \mathbf{d} + \mathbf{f})\times100/(\mathbf{a} + \mathbf{b} + \mathbf{c} + \mathbf{d} + \mathbf{e} + \mathbf{f})$. The preferred ranges are as mentioned above.

$R_1$ in the formula (i) is a hydrogen atom, a linear or branched alkyl group having from 1 to 6 carbon atoms, a $-CH_2CH(CH_3)NH_2$ group, or a group represented by the formula (ii) defined above, and a hydrogen atom is preferred, from the viewpoint of obtaining a resin composition having excellent heat resistance. The linear or branched alkyl group having from 1 to 6 carbon atoms is preferably a methyl group, an ethyl group, and an iso- or normal-propyl group.

In addition, when $R_1$ in the formula (i) is a group represented by the formula (ii), the linear or branched alkyl group having from 1 to 3 carbon atoms of $R_2$ in the formula (ii) is preferably a methyl group and an ethyl group. When $R_2$ is a methyl group or an ethyl group, it is preferable that n is 1, and when $R_2$ is a hydrogen atom, it is preferable that n is 0. In addition, **c** and **e** in the formula (ii) are independently preferably from 10 to 30, and **d** and **f** are independently preferably from 5 to 25.

The amine having an EO/PO copolymer moiety represented by the formula (i) can be prepared in accordance with a known method. For example, ethylene oxides and propylene oxides may be added in desired amounts to a propylene glycol alkyl ether, and thereafter a hydroxyl group terminal may be formed into an amino group. The alkyl ether may be opened with an acid as needed so as to have a hydrogen atom at a terminal. For these production methods, Japanese Patent Laid-Open No. Hei-3-181448 can be referred.

As the above amine having an EO/PO copolymer moiety, a commercially available product can be suitably used, and specific examples include Jeffamine M-2070, Jeffamine M-2005, Jeffamine M-2095, Jeffamine M-1000, Jeffamine M-600, Surfoamine B200, Surfoamine L100, Surfoamine L200, Surfoamine L207, Surfoamine L300, XTJ-501, XTJ-506, XTJ-507, XTJ-508 manufactured by HUNTSMAN; M3000 manufactured by BASF, Jeffamine ED-900, Jeffamine ED-2003, Jeffamine D-2000, Jeffamine D-4000, XTJ-510, Jeffamine T-3000, Jeffamine T-5000, XTJ-502, XTJ-509, XTJ-510 and the like. Among them, preferred are Jeffamine M-2070, Jeffamine M-2005, Jeffamine M-1000, Jeffamine M-600, Surfoamine L100, Surfoamine L200, Surfoamine L207, and Surfoamine L300, from the viewpoint of heat resistance. These can be used alone or in a combination of two or more kinds.

The average binding amount of the EO/PO copolymer moiety in the fine cellulose fiber composite is preferably 0.01 mmol/g or more, more preferably 0.05 mmol/g or more, even more preferably 0.1 mmol/g or more, even more preferably 0.3 mmol/g or more, and even more preferably 0.5 mmol/g or more, from the viewpoint of obtaining a resin composition having excellent heat resistance. In addition, the average binding amount is preferably 3 mmol/g or less, more preferably 2.5 mmol/g or less, even more preferably 2 mmol/g or less, even more preferably 1.8 mmol/g or less, and even more preferably 1.5 mmol/g or less, from the viewpoint of reactivity. In a case where two or more kinds of hydrocarbon groups and the copolymer moieties are introduced as modifying groups, it is preferable that an average binding amount of each modifying group is within the range defined above.

The modification ratio of the EO/PO copolymer moiety in the fine cellulose fiber composite is preferably 10% or more, more preferably 20% or more, even more preferably 30% or more, even more preferably 40% or more, even more preferably 50% or more, even more preferably 60% or more, even more preferably 70% or more, from the viewpoint of obtaining a resin composition having excellent heat resistance, and the modification ratio is preferably 95% or less, from the viewpoint of obtaining a resin composition having excellent heat resistance.

Here, the above modifying group may have a substituent. For example, in a case where the modifying group is a hydrocarbon group, it is preferable that a total number of carbons of an overall modifying group including a substituent is within the range defined above. The substituent includes, for example, alkoxy groups having from 1 to 6 carbon atoms, such as a methoxy group, an ethoxy group, a propoxy group, an isopropoxy group, a butoxy group, an isobutoxy group, a sec-butoxy group, a tert-butoxy group, a pentyloxy group, an isopentyloxy group, and a hexyloxy group; alkoxycarbonyl groups of which alkoxy group has from 1 to 6 carbon atoms, such as a methoxycarbonyl group, an ethoxycarbonyl group, a propoxycarbonyl group, an isopropoxycarbonyl group, a butoxycarbonyl group, an isobutoxycarbonyl group, a sec-butoxycarbonyl group, a tert-butoxycarbonyl group, a pentyloxycarbonyl group, and an isopentyloxycarbonyl group; halogen atoms such as a fluorine atom, a chlorine atom, a bromine atom, and an iodine atom; acyl groups having from 1 to 6 carbon atoms such as an acetyl group and a propionyl group; aralkyl groups; aralkyloxy groups; alkylamino groups having from 1 to 6 carbon atoms; and dialkylamino groups of which alkyl group has from 1 to 6 carbon atoms. Here, the hydrocarbon group mentioned above itself may be bonded as a substituent.

The average binding amount of the modifying group as used herein can be adjusted by an amount of a compound having a modifying group, the kinds of a compound having a modifying group, a reaction temperature, a reaction time, a solvent, or the like. In addition, the average binding amount (mmol/g) and the introduction ratio (%) of the modifying

group in the fine cellulose fiber composite are an amount and a proportion of the modifying group introduced to a carboxy group on the surface of the fine cellulose fibers, and the carboxy group content of the fine cellulose fibers can be calculated by a measurement in accordance with a known method (for example, titration, IR determination, or the like).

< Fine Cellulose Fiber Composite and Method for Production Thereof >

The fine cellulose fiber composite of the present invention can be produced in accordance with a known method without particular limitations, so long as a modifying group can be introduced to fine cellulose fibers as mentioned above. For example, a reaction of introducing a modifying group to previously prepared fine cellulose fibers having a low aspect ratio may be carried out, a reaction of introducing a modifying group to fine cellulose fibers having an average aspect ratio outside the range defined above, and then subjecting the modified fine fibers to a treatment of lowering an aspect ratio may be carried out, or a reaction of introducing a modifying group during the preparation of a fine cellulose fiber composite having a low aspect ratio may be carried out. Here, as the fine cellulose fibers as used herein, fine cellulose fibers in which carboxy groups are introduced in an amount of 0.1 mmol/g or more can be prepared according to a known method, for example, by referring to a method described in Japanese Patent Laid-Open No. 2011-140632. Alternatively, a natural cellulose, a mixed solvent of or a lower alcohol such as isopropyl alcohol and water, and a catalyst such as sodium hydroxide are mixed, a carboxy introducing agent such as sodium chloroacetate is added thereto, and the components are reacted. Thereafter, a reaction mixture is subjected to a finely fibrillating treatment by a known method, whereby fine cellulose fibers in which carboxy groups are introduced in an amount of 0.1 mmol/g or more via an ether bonding can be obtained.

Specific production methods include the following two embodiments depending upon embodiments of introducing a modifying group to fine cellulose fibers. Specific examples include:

an embodiment of binding a modifying group to fine cellulose fibers via ionic bonding (embodiment A); and
an embodiment of binding a modifying group to fine cellulose fibers via covalent bonding (embodiment B).

Here, a case of an amide bonding is given hereinbelow as a covalent bonding.

[Embodiment A]

step (1): oxidizing natural cellulose fibers in the presence of an N-oxyl compound, to provide carboxy group-containing cellulose fibers; and
step (2A): mixing the carboxy group-containing cellulose fibers obtained in the step (1) and a compound having a modifying group.

[Embodiment B]

step (1): oxidizing natural cellulose fibers in the presence of an N-oxyl compound, to provide carboxy group-containing cellulose fibers; and
step (2B): subjecting the carboxy group-containing cellulose fibers obtained in the step (1) and a compound having a modifying group to an amidation reaction.

The method of introducing a modifying group can be carried out by referring to, for example, a method described in Japanese Patent Laid-Open No. 2015-143336 for the embodiment A, or to a method described in Japanese Patent Laid-Open No. 2015-143337 for the embodiment B. In addition, the present invention includes

a method including, subsequent to the step (1), carrying out a finely fibrillating step described later and/or a step of treatment of lowering an aspect ratio, to provide carboxy group-containing fine cellulose fibers having a low aspect ratio, and thereafter carrying out a step (2A or 2B) (First Production Embodiment); and
a method including, subsequent to the step (1), carrying out a step (2A or 2B), and then carrying out a finely fibrillating step and/or a step of treatment of lowering an aspect ratio, to provide a fine cellulose fiber composite of the present invention (Second Production Embodiment).

It is preferable that the method is carried out according to the first production embodiment, from the viewpoint

of efficiently carrying out a treatment of lowering an aspect ratio and modification. In other words, in the step (1), it is preferable that carboxy group-containing fine cellulose fibers having a low aspect ratio are obtained.

The method for producing a fine cellulose fiber composite will be explained hereinafter on the basis of First Production Embodiment of the embodiment A.

[Step (1)]

The step (1) is a step of oxidizing natural cellulose fibers in the presence of an N-oxyl compound, to provide carboxy group-containing cellulose fibers. Specifically, natural cellulose fibers are subjected to an oxidation treatment step (for example, an oxidation treatment with 2,2,6,6-tetramethylpiperidin-1-oxyl (TEMPO)), described in Japanese Patent Laid-Open No. 2015-143336 or 2015-143337 and (optionally) a purifying step, thereby obtaining carboxy group-containing cellulose fibers having a carboxy group content of preferably 0.1 mmol/g or more.

By oxidizing the natural cellulose fibers with TEMPO as a catalyst, a group at C6 position ($-CH_2OH$) of the cellulose constituting unit is selectively converted to a carboxy group. Therefore, a preferred embodiment of the carboxy group-containing cellulose fibers in the present invention includes cellulose fibers in which C6 position of the cellulose constituting unit is a carboxy group.

The natural cellulose fibers which are raw materials include, for example, wooden pulp such as pulp from needle-leaf trees and pulp from broad-leaf trees; cotton pulp such as cotton linter and cotton lint; non-wooden pulp such as maize straw pulp and bagasse pulp; bacteria cellulose; and the like. These natural cellulose fibers can be used alone or in a combination of two or more kinds. The natural cellulose fibers may be subjected to a treatment of increasing surface areas such as treatment with a beater. In addition, the cellulose I crystallinity of the above-mentioned commercially available pulp is usually 80% or more.

(Finely Fibrillating Step)

Next, in First Production Embodiment, after the purifying step, a step of finely fibrillating the carboxy group-containing cellulose fibers obtained in the step (1) is carried out, to provide carboxy group-containing cellulose fibers having a low aspect ratio. In the finely fibrillating step, it is preferable that the carboxy group-containing cellulose fibers obtained through the above-mentioned purifying step are dispersed in a solvent, and subjected to a finely fibrillating treatment.

The solvent used as a dispersion medium is exemplified by water, an alcohol having from 1 to 6 carbon atoms, and preferably from 1 to 3 carbon atoms, such as methanol, ethanol, propanol, or isopropanol; a ketone having from 3 to 6 carbon atoms, such as acetone, methyl ethyl ketone or methyl isobutyl ketone; an ester having from 3 to 6 carbon atoms, such as ethyl acetate or butyl acetate; a linear or branched, saturated hydrocarbon or unsaturated hydrocarbon having from 1 to 6 carbon atoms; an aromatic hydrocarbon such as benzene or toluene; a halogenated hydrocarbon such as methylene chloride, chloroform, or chlorobenzene; a lower alkyl ether having from 2 to 5 carbon atoms such as tetrahydrofuran; an aprotic polar solvent such as N,N-dimethylformamide, N,N-dimethylacetamide, dimethyl sulfoxide, N-methylpyrrolidone, or acetonitrile; a hydrocarbon solvent such as hexane, squalane, or paraffin, and the like. These solvents can be used alone or in a mixture of two or more kinds. The solvent is preferably water, an alcohol having from 1 to 6 carbon atoms, a ketone having from 3 to 6 carbon atoms, a lower alkyl ether having from 2 to 5 carbon atoms, or a polar solvent such as N,N-dimethylformamide, N,N-dimethylacetamide, dimethyl sulfoxide, or N-methylpyrrolidone, from the viewpoint of operability of the finely fibrillating treatment. The amount of the solvent used is not particularly limited, so long as the amount used is an effective amount that can disperse the carboxy group-containing cellulose fibers. The solvent is used in an amount of preferably from 1 to 500 times the mass, and more preferably from 2 to 200 times the mass, based on the carboxy group-containing cellulose fibers.

In addition, as an apparatus to be used in the finely fibrillating treatment, a known dispersing machine is suitably used. For example, disintegrator, a beating machine, a low-pressure homogenizer, a highpressure homogenizer, a grinder, a cutter mill, a ball-mill, a jet mill, a short shaft extruder, a twin-screw extruder, an ultrasonic agitator, a juice mixer for households, or the like can be used. In addition, the solid content concentration of the reaction product fibers in the finely fibrillating treatment is preferably 50% by mass or less.

(Step of Treatment of Lowering Aspect Ratio)

In addition, in First Production Embodiment, at least one treatment of lowering an aspect ratio selected from biochemical treatments, chemical treatments, and mechanical treatments is carried out to carboxy group-containing cellulose fibers, whereby carboxy group-containing fine cellulose fibers having a low aspect ratio can be obtained, from the viewpoint of efficiently obtaining a composite having a low aspect ratio. The treatment of lowering an aspect ratio specifically includes treatment methods such as acid hydrolysis, hydrothermal decomposition, oxidation decomposition,

mechanical treatment with a planetary ball-mill, a rod mill or the like, enzyme treatment, an alkali treatment, UV treatment, and electronic beam treatment. By these treatments, the cellulose fibers can be shortened, so that the finely fibrillating treatment can be more efficiently carried out, which in turn allows an average aspect ratio to fall within the range defined above. For details, the section for the method for preparing fine cellulose fibers having a low aspect ratio mentioned above can be referred. Here, in the present invention, so long as the fine cellulose fibers obtained have a low aspect ratio, only one of the treatment of lowering an aspect ratio and the finely fibrillating treatment or both may be carried out, and in the case of carry out the both, it does not matter which of the treatments comes first in the order. Further, in the present invention, in order to have an average aspect ratio within a desired range, for example, the fine cellulose fibers having a low aspect ratio may be mixed with fine cellulose fibers having a high aspect ratio in which an aspect ratio is greater than 150. The mixing ratio (the mass of the fine cellulose fibers having a high aspect ratio /the mass of the fine cellulose fibers having a low aspect ratio) is preferably 1 or less, more preferably 0.4 or less, even more preferably 0.1 or less, even more preferably 0.05 or less, and even more preferably 0.01 or less, from the viewpoint of including the composite in the resin, thereby improving heat resistance and mechanical strength when formed into a resin composition.

The form of the carboxy group-containing fine cellulose fibers obtained having a low aspect ratio can be, as occasion demands, in the form of a suspension of which solid content concentration is adjusted, e.g. visually colorless transparent or opaque liquid, or in the form of powder subjected to a drying treatment, provided that it is intended to mean that the fine cellulose fibers are in the form of an aggregated powder, not cellulose particles. Here, when provided in the form of a suspension, as a dispersion medium, water alone may be used, or a mixed solvent of water with other organic solvent, e.g. an alcohol such as ethanol, a surfactant, an acid, a base or the like may be used.

Thus, hydroxyl groups at a C6-position of the cellulose constituting unit are selectively oxidized to carboxy groups via aldehyde groups whereby fine cellulose fibers having a low aspect ratio, the fine cellulose fibers preferably being finely fibrillated to an average fiber diameter of from 0.1 to 200 nm, and having a crystallinity of preferably 30% or more, and an average aspect ratio of preferably 1 or more and 150 or less, can be obtained, the fine cellulose fibers being composed of a cellulose having the above-mentioned carboxy group content of 0.1 mmol/g or more. The above carboxy group-containing fine cellulose fibers have a cellulose I crystal structure. This means that the carboxy group-containing fine cellulose fibers used in the present invention are fibers prepared by subjecting cellulose solid raw materials derived from nature having a cellulose I crystal structure to surface oxidation and fine fibrillation.

[Step (2A)]

In First Production Embodiment, the step (2A) is a step of mixing the carboxy group-containing fine cellulose fibers having a low aspect ratio obtained through the above-mentioned finely fibrillating step and a compound having a modifying group, to provide a fine cellulose fiber composite. Specifically, the above carboxy group-containing fine cellulose fibers having a low aspect ratio, and a compound having a modifying group may be mixed in a solvent; for example, a fine cellulose fiber composite can be produced in accordance with a method described in Japanese Patent Laid-Open No. 2015-143336.

The compound having a modifying group usable in the step (2A) includes those that are mentioned above in the fine cellulose fiber composite. When two or more kinds of modifying groups are introduced, a fine cellulose fiber composite in which two or more modifying groups are introduced can be produced by using two or more kinds of compounds having a modifying group in this step.

The amount of the above compound used can be determined according to the desired binding amount of the modifying group in the fine cellulose fiber composite, and the compound is used in an amount such that the amine groups, based on one mol of the carboxy groups contained in the carboxy group-containing fine cellulose fibers having a low aspect ratio are used in an amount of preferably 0.01 mol or more, more preferably 0.1 mol or more, even more preferably 0.5 mol or more, even more preferably 0.7 mol or more, and even more preferably 1 mol or more, from the viewpoint of reactivity, and that the amine groups are used in an amount of preferably 50 mol or less, more preferably 20 mol or less, and even more preferably 10 mol or less, from the viewpoint of manufactured article purity. Here, the compounds in an amount contained in the above range may be supplied to the reaction at once, or may be supplied in divided portions. When the compound is a monoamine, the above amine groups are the same as the amine. When compounds having two or more kinds of modifying groups are used, the amounts of the compounds used are a total amount of each of the compounds.

As the solvent, it is preferable to select a solvent that dissolves a compound used, and the solvent includes, for example, methanol, ethanol, isopropanol (IPA), N,N-dimethylformamide (DMF), dimethyl sulfoxide (DMSO), N,N-dimethylacetamide, tetrahydrofuran (THF), acetone, methyl ethyl ketone (MEK), acetonitrile, dichloromethane, chloroform, toluene, acetic acid, water, and the like. These solvents can be used alone or in a combination of two or more kinds. Among these polar solvents, methanol, ethanol, IPA, DMF, DMSO, MEK and water are preferred.

The temperature during mixing is preferably 0°C or higher, more preferably 5°C or higher, and even more preferably 10°C or higher, from the viewpoint of reactivity of the compound. In addition, the temperature is preferably

50°C or lower, more preferably 40°C or lower, and even more preferably 30°C or lower, from the viewpoint of coloration of the composite. The mixing time can be appropriately set depending upon the kinds of the compounds and solvents used, and the mixing time is preferably 0.01 hours or more, more preferably 0.1 hours or more, and even more preferably 1 hour or more, and preferably 48 hours or less, and more preferably 24 hours or less, from the viewpoint of reactivity of the compound.

After the salt formation mentioned above, appropriate post-treatments may be carried out in order to remove unreacted compounds and the like. As the method for post-treatments, for example, filtration, centrifugation, dialysis, or the like can be used.

In addition, in the production method of the embodiment B, the step (1) can be carried out in the same manner as in Embodiment A, so that the step (2B) in First Production Embodiment will be described hereinbelow. For example, the compound can be produced by a method described in Japanese Patent Laid-Open No. 2013-151661.

[Step (2B)]

In First Production Embodiment, the step (2B) is a step of subjecting the carboxy group-containing fine cellulose fibers having a low aspect ratio obtained through the above-mentioned finely fibrillating step and a compound having a modifying group to an amidation reaction, to provide a fine cellulose fiber composite. As the above mixing method, there would be no problems so long as the raw materials are mixed to an extent that are reactive. Specifically, the above raw materials are mixed in the presence of a condensing agent, so that a carboxy group contained in carboxy group-containing fine cellulose fibers having a low aspect ratio and an amino group of the compound having a modifying group are subjected to a condensation reaction, to form an amide bonding.

The compound having a modifying group usable in the step (2B) includes those listed above in the fine cellulose fiber composite mentioned above. When two or more kinds of modifying groups are introduced, a fine cellulose fiber composite in which two or more modifying groups are introduced can be produced by using two or more kinds of compounds having a modifying group in this step.

In the step (2B), the carboxy group-containing fine cellulose fibers having a low aspect ratio and a compound having a modifying group are subjected to amidation in the presence of a condensing agent.

The amount of the above compound having a modifying group used is an amount such that the amine groups, based on one mol of the carboxy groups contained in the carboxy group-containing fine cellulose fibers having a low aspect ratio are used in an amount of preferably 0.1 mol or more, and more preferably 0.5 mol or more, from the viewpoint of reactivity, and that the amine groups are used in an amount of preferably 50 mol or less, more preferably 20 mol or less, and even more preferably 10 mol or less, from the viewpoint of manufactured article purity. Here, the compounds in an amount contained in the above range may be supplied to the reaction at once, or may be supplied in divided portions. When compounds having two or more kinds of modifying groups are used, the amounts of the compounds are a total amount of each of the compounds.

The condensing agent is not particularly limited, and includes condensing agents described in Gosei Kagaku Shirizu Pepuchido Gosei (Synthetic Chemistry Series Peptide Synthesis) (Maruzen Publishing), page 116, or described in Tetrahedron, 57, 1551(2001), and the like. The condensing agent includes, for example, 4-(4,6-dimethoxy-1,3,5-triazin-2-yl)-4-methylmorpholinium chloride (may be hereinafter referred to as "DMT-MM" in some cases), and the like.

In the above amidation reaction, the solvent includes those in the above finely fibrillating step, and it is preferable to select a solvent that dissolves a compound used.

The reaction time and the reaction temperature in the above amidation reaction can be appropriately selected in accordance with the kinds of the compounds used and the solvents used and the like. The reaction time is preferably from 1 to 24 hours, and more preferably from 10 to 20 hours, from the viewpoint of reaction ratio. Also, the reaction temperature is preferably 0°C or higher, more preferably 5°C or higher, and even more preferably 10°C or higher, from the viewpoint of reactivity. In addition, the reaction temperature is preferably 200°C or lower, more preferably 80°C or lower, and even more preferably 30°C or lower, from the viewpoint of the coloration of the composite.

After the above reaction, post-treatments may be appropriately carried out in order to remove unreacted compounds, the condensing agent, and the like. As the method for post-treatments, for example, filtration, centrifugation, dialysis, or the like can be used.

Here, in both Embodiment A and Embodiment B, in Second Production Embodiment, each of the steps mentioned above can be carried out in the same manner as First Production Embodiment except that the steps are carried out in the order of the step (1), the step (2A) or step (2B), and the finely fibrillating step.

In addition, the fine cellulose fiber composite may be obtained by combining Embodiments A and B, specifically, the fine cellulose fiber composite may be a fine cellulose fiber composite having a modifying group connected via an ionic bonding and a modifying group connected via an amide bonding. In this case, either the step (2A) or (2B) may be may be carried out first.

Thus, a fine cellulose fiber composite having a low aspect ratio in which a modifying group is connected to fine

cellulose fibers via ionic bonding and/or covalent bonding can be obtained.

The average fiber diameter of the fine cellulose fiber composite obtained is preferably 0.1 nm or more, more preferably 0.5 nm or more, even more preferably 1 nm or more, even more preferably 2 nm or more, and still even more preferably 3 nm or more, from the viewpoint of including the composite in the resin, thereby improving heat resistance and mechanical strength when formed into a resin composition. Also, the average fiber diameter is preferably 100 nm or less, more preferably 50 nm or less, more preferably 20 nm or less, even more preferably 10 nm or less, even more preferably 6 nm or less, and still even more preferably 5 nm or less, from the viewpoint of including the composite in the resin, thereby improving heat resistance when formed into a resin composition.

The length (average fiber length) of the fine cellulose fiber composite obtained is preferably 150 nm or more, and more preferably 200 nm or more, from the viewpoint of including the composite in the resin, thereby improving heat resistance when formed into a resin composition. In addition, the length is preferably 1,000 nm or less, more preferably 750 nm or less, even more preferably 500 nm or less, and even more preferably 400 nm or less, from the viewpoint of including the composite in the resin, thereby improving heat resistance when formed into a resin composition.

Also, the average aspect ratio (fiber length/fiber diameter) of the fine cellulose fiber composite obtained is 1 or more and 150 or less, and the average aspect ratio is preferably 10 or more, more preferably 20 or more, even more preferably 40 or more, and even more preferably 50 or more, from the viewpoint of including the composite in the resin, thereby improving heat resistance when formed into a resin composition, and the average aspect ratio is preferably 140 or less, more preferably 130 or less, even more preferably 100 or less, even more preferably 95 or less, and even more preferably 90 or less, from the viewpoint of including the composite in the resin, thereby improving heat resistance and mechanical strength when formed into a resin composition. In addition, when the average aspect ratio is within the above range, the standard deviation of the aspect ratio is preferably 60 or less, more preferably 50 or less, and even more preferably 45 or less, from the viewpoint of including the composite in the resin, thereby improving heat resistance when formed into a resin composition. Although the lower limit is not particularly set, the lower limit is preferably 4 or more, from the viewpoint of economic advantages. The fine cellulose fiber composite having a low aspect ratio as defined above not only has excellent heat resistance but also excellent dispersibility in the resin composition, so that a resin composition having high mechanical strength that is less likely to undergo brittle fracture is obtained.

Here, the average fiber diameter, the average fiber length, the average aspect ratio, and the crystallinity of the fine cellulose fiber composite as used herein can be obtained in accordance with the same measurement methods as described in the fine cellulose fibers.

The fine cellulose fiber composite obtained can be used in a state of a dispersion after carrying out the above post-treatments. Alternatively, solvents are removed from the dispersion by a drying treatment or the like, to provide a dried fine cellulose fiber composite in a powder form, and this powder can also be used. Here, the "powder form" is a powder form in which the fine cellulose fiber composites are aggregated, and does not mean the cellulose particles.

The fine cellulose fiber composite in a powdery state includes, for example, a dried product obtained by directly drying a dispersion of the above-mentioned fine cellulose fiber composite; a powdered product obtained by a mechanical treatment of the dried product; a powdered product obtained by powdering a dispersion of the above-mentioned fine cellulose fiber composite according to a known spray-drying method; a powdered product obtained by powdering a dispersion of the above-mentioned fine cellulose fiber composite according to a known freeze-drying method; and the like. The above spray-drying method is a method including spraying the above-mentioned dispersion of a fine cellulose fiber composite in the air, and drying the dispersion.

Here, since in the fine cellulose fiber composite, the crystallinity would not be lowered by the reaction of the step (2A) or (2B), it is preferable that the fine cellulose fiber composite has a crystallinity of the same level as the crystallinity of the above-mentioned fine cellulose fibers.

The fine cellulose fiber composite of the present invention can be suitably used in the provision of a resin composition having excellent heat resistance. The fine cellulose fiber composite of the present invention has excellent dispersion stability in an organic solvent or a resin, the composite can be used in applications to thickening agents, gelation agents, rheology adjustment agents, emulsifying agents, dispersants, and the like.

[Resin Composition]

[Resin]

As the resin in the present invention, a thermoplastic resin, a curable resin, a cellulosic resin, or an elastomeric resin can be used.

The thermoplastic resin includes saturated polyester resins such as polylactic acid resins; olefinic resins such as polyethylene resins and polypropylene resins; vinyl chloride resins, styrene resins, (meth)acrylic resins, vinyl ether resins, polyvinyl alcohol resins, polyvinyl acetal resins, polyvinyl acetate resins, polyamide resins, polycarbonate resins, polysulfonate resins and the like. These thermoplastic resins may be used alone or may be used as mixed resins of two

or more kinds. Among them, the saturated polyester resins, the olefin resins, the vinyl chloride resins, styrene resins, the (meth)acrylic resins, and the polyamide resins are preferred, from the viewpoint of obtaining a resin composition having excellent heat resistance. Here, the term (meth)acrylic resin as used herein means to embrace methacrylic resins and acrylic resins.

As the (meth)acrylic resin, those containing 50% by weight or more of methyl (meth)acrylate as a monomer unit, on the basis of a total of the monomer units of the entire polymer constituting the resin are preferred, and a methacrylic resin is more preferred.

The methacrylic resin can be produced by copolymerizing methyl methacrylate and other monomer copolymerizable therewith. The polymerization method is not particularly limited, and includes, for example, a bulk polymerization method, a solution polymerization method, a suspension polymerization method, a casting polymerization method, e.g. a cell casting polymerization method and the like, and the casting polymerization method, e.g. a cell casting polymerization method, is preferred, from the viewpoint of productivity. In addition, the methacrylic resin having excellent heat resistance is obtained by subjecting a polymerizable mixture containing the above monomer mixture and a radical polymerization initiator to a polymerization reaction.

The curable resin is preferably a photo-curable resin and/or a thermosetting resin.

The photo-curable resin allows to progress the polymerization reaction by active energy ray irradiation of ultraviolet rays or electron beams, using a photopolymerization initiator that generates a radical or a cation.

The above photopolymerization initiator includes, for example, acetophenones, benzophenones, ketals, anthraquinones, thioxanthones, azo compounds, peroxides, 2,3-dialkyldione compounds, disulfide compounds, thiuram compounds, fluoroamine compounds, and the like. More specific examples include 1-hydroxy-cyclohexyl-phenyl-ketone, 2-methyl-1 [4-(methylthio)phenyl]-2-morpholinopropan-1-one, benzyl methyl ketone, 1-(4-dodecylphenyl)-2-hydroxy-2-methylpropan-1-one, 1-(4-isopropylphenyl)-2-hydroxy-2-hydroxy-2-methylpropan-1-one, benzophenone, and the like. Among them, 1-hydroxy-cyclohexyl-phenyl-ketone is preferred, from the viewpoint of improving antistatic property, waterproofness, transparency, and rubbing resistance.

With the photopolymerization initiator, for example, a monomer (monofunctional monomer, polyfunctional monomer), or an oligomer or resin or the resin or the like, having a reactive unsaturated group can be polymerized.

The monofunctional monomer includes, for example, (meth)acrylic monomers such as (meth)acrylic acid esters; vinyl-based monomers such as vinyl pyrrolidone; (meth)acrylates having a bridged cyclohydrocarbon group such as isobornyl (meth)acrylate and adamantyl (meth)acrylate; and the like. The polyfunctional monomer contains a polyfunctional monomer having 2 to 8 or so polymerizable groups, and the bifunctional monomer includes, for example, di(meth)acrylates having a bridged cyclohydrocarbon group such as ethylene glycol di(meth)acrylate and propylene glycol di(meth)acrylate, and the like. The tri- to octo-functional monomer includes, for example, glycerol tri(meth)acrylate, and the like.

Examples of the oligomer or resin having a reactive unsaturated group include (meth)acrylates of alkylene oxide adducts of bisphenol A, epoxy (meth)acrylates (bisphenol A type epoxy (meth)acrylate, novolak type epoxy (meth)acrylate, etc.), polyester (meth)acrylates (e.g., aliphatic polyester-type (meth)acrylates, aromatic polyester-type (meth)acrylates, etc.), urethane (meth)acrylates (polyester-type urethane (meth)acrylates, polyether-type urethane (meth)acrylates, etc.), silicone (meth)acrylates, and the like. The above oligomer or resin may be used together with the above monomer.

The photo-curable resin is preferred, from the viewpoint of providing a resin composition having a smaller amount of aggregates, and having excellent transparency.

The thermosetting resin includes, for example, epoxy resins; phenol resins; urea resins; melamine resins; unsaturated polyester resins; diallyl phthalate resins; polyurethane resins; silicone resins; polyimide resins; and the like. The thermosetting resin can be used alone or in a combination of two or more kinds. Among them, the epoxy resins, the phenolic resins, the urea resins, the melamine resins, unsaturated polyester resins, and the polyurethane resins are preferred, and the epoxy resins are more preferred, from the viewpoint of obtaining a resin composition having excellent heat resistance.

When an epoxy resin is used in the above resin component, it is preferable to use a curing agent. By blending a curing agent, molding materials obtained from the resin composition can be firmly molded, whereby the mechanical strength can be improved. Here, the content of the curing agent may be appropriately set depending upon the kinds of the curing agents used.

The cellulosic resin includes organic acid esters of cellulose mixed acylates such as cellulose acetate and cellulose acetate propionate; inorganic acid esters such as nitrate cellulose and phosphate cellulose; mixed acid esters of organic acid-inorganic acid such as acetate nitrate cellulose; cellulose ether esters such as acetylated hydroxypropyl cellulose; and the like. The above acetate cellulose includes cellulose triacetate (degree of acetyl substitution: 2.6 to 3), cellulose diacetate (degree of acetyl substitution: 2 or more and less than 2.6), and cellulose monoacetate. Among the above cellulosic resins, the organic acid esters of cellulose are preferred, and acetate celluloses (e.g., cellulose triacetate and cellulose diacetate) are more preferred, from the viewpoint of obtaining a resin composition having excellent heat

resistance. The cellulosic resins may be used alone or in a combination of two or more kinds.

In addition, in the present invention, an elastomeric resin can be used. As the elastomeric resin, the carbon black blend product is widely used as a reinforcing material in order to increase the strength, but the reinforcing effects are considered to have some limitations. However, in the present invention, it is considered as follows. Since the fine cellulose fiber composite of the present invention is blended with the elastomeric resin, it is considered that the dispersibility in the rubber composition obtained becomes excellent, thereby making it possible to provide a resin composition having excellent mechanical strength and heat resistance.

As the elastomeric resin, a diene-based rubber, or a non-diene-based rubber is preferred.

The diene-based rubber includes natural rubbers, polyisoprene rubbers, polybutadiene rubbers, styrene-butadiene copolymer rubbers, butyl rubbers, butadiene-acrylonitrile copolymer rubbers, chloroprene rubbers, modified natural rubbers, and the like. The modified natural rubber includes epoxidized natural rubbers, hydrogenated natural rubbers, and the like. The non-diene-based rubber includes butyl rubbers, ethylene-propylene rubbers, ethylene-propylene-diene rubbers, urethane rubbers, silicone rubbers, fluorine-containing rubbers, acrylic rubbers, vulcanized rubbers, epichlorohydrin rubbers, and the like. These can be used alone or in a combination of two or more kinds. Among them, one or more members selected from natural rubbers, polyisoprene rubbers, polybutadiene rubbers, and styrene-butadiene copolymer rubbers, chloroprene rubbers, and modified natural rubbers are preferred, and one or more members selected from natural rubbers, styrene-butadiene copolymer rubbers, and modified natural rubbers are more preferred, from the viewpoint of satisfying both favorable excellent workability and high-impact resilience of the rubber composition.

The content of the resin in the resin composition, the amount of the fine cellulose fiber composite based on the resin, and the amount of the fine cellulose fibers based on the resin (conversion amount) depend on the kinds of the resins, which are as follows.

The content of the resin in the resin composition of the present invention is preferably 50% by mass or more, more preferably 60% by mass or more, 70% by mass or more, even more preferably 80% by mass or more, and even more preferably 85% by mass or more, from the viewpoint of producing a molded article, and the content is preferably 99% by mass or less, more preferably 98% by mass or less, even more preferably 95% by mass or less, and even more preferably 90% by mass or less, from the viewpoint of including the fine cellulose fiber composite or the like.

The content of the fine cellulose fiber composite in the resin composition of the present invention is preferably 0.1% by mass or more, more preferably 0.5% by mass or more, even more preferably 1% by mass or more, even more preferably 2% by mass or more, even more preferably 5% by mass or more, and even more preferably 10% by mass or more, from the viewpoint of mechanical strength, dimensional stability, and heat resistance of the resin composition obtained, and the content is preferably 50% by mass or less, more preferably 40% by mass or less, even more preferably 30% by mass or less, even more preferably 20% by mass or less, and still even more preferably 15% by mass or less, from the viewpoint of transparency of the resin composition obtained.

The amount of the fine cellulose fiber composite in the resin composition of the present invention, based on 100 parts by mass of the resin, is preferably 0.1 parts by mass or more, more preferably 1 part by mass or more, even more preferably 2 parts by mass or more, even more preferably 5 parts by mass or more, and even more preferably 10 parts by mass or more, from the viewpoint of mechanical strength, dimensional stability, and heat resistance of the resin composition obtained, and the amount is preferably 100 parts by mass or less, more preferably 70 parts by mass or less, even more preferably 50 parts by mass or less, even more preferably 30 parts by mass or less, and even more preferably 20 parts by mass or less, from the viewpoint of transparency of the resin composition obtained.

The amount of the fine cellulose fibers (conversion amount) in the resin composition of the present invention, based on 100 parts by mass of the resin, is preferably 0.1 parts by mass or more, more preferably 1 part by mass or more, even more preferably 2 parts by mass or more, and even more preferably 5 parts by mass or more, from the viewpoint of mechanical strength and the like of the resin composition obtained, and the amount is preferably 100 parts by mass or less, more preferably 70 parts by mass or less, even more preferably 50 parts by mass or less, even more preferably 30 parts by mass or less, and even more preferably 20 parts by mass or less, from the viewpoint of transparency of the resin composition obtained. Here, the amount of the fine cellulose fibers (conversion amount) as used herein is specifically measured in accordance with a method described in Examples set forth below.

The resin composition of the present invention can contain a plasticizer in addition to the above components.

The plasticizer is not particularly limited, and includes conventionally known plasticizers polycarboxylic acid esters such as phthalic acid esters, succinic acid esters, and adipic acid esters; fatty acid esters of an aliphatic polyol such as glycerol; and the like. Among them, an ester compound containing two or more ester groups in the molecule, the ester compound in which at least one kind of the alcohol component constituting the ester compound is an adduct of an alcohol reacted with an alkylene oxide having from 2 to 3 carbon atoms in an amount of from 0.5 to 5 mol on average, per one hydroxyl group, is preferred. Specific examples include plasticizers listed in Japanese Patent Laid-Open Nos. 2008-174718 and 2008-115372.

The content of the plasticizer, based on 100 parts by mass of the resin, is preferably 1 part by mass or more, more preferably 3 parts by mass or more, and even more preferably 5 parts by mass or more, from the viewpoint of

improving transparency of the molded article when formed into a molded article, and the content is preferably 30 parts by mass or less, more preferably 20 parts by mass or less, and even more preferably 15 parts by mass or less, from the same viewpoint.

Since the fine cellulose fiber composite of the present invention has a smaller amount of aggregates and excellent transparency by dispersing in a plasticizer, the fine cellulose fiber composite can be suitably used in the production of a resin composition containing a thermosetting resin or curable resin mentioned above and a fine cellulose fiber composite.

The resin composition of the present invention can contain, as other components besides those mentioned above, a crystal nucleating agent, a filler including an inorganic filler and an organic filler, a hydrolysis inhibitor, a flame retardant, an antioxidant, a lubricant such as a hydrocarbon wax or an anionic surfactant, an ultraviolet absorbent, an antistatic agent, an anti-clouding agent, a photostabilizer, a pigment, a mildewproof agent, a bactericidal agent, a blowing agent, or a surfactant; a polysaccharide such as starch or alginic acid; a natural protein such as gelatin, glue, or casein; an inorganic compound such as tannin, zeolite, ceramics, or metal powder; a perfume; a fluidity modulator; a leveling agent; an electroconductive agent; a ultraviolet dispersant; a deodorant; or the like, within the range that would not impair the effects of the present invention. In addition, similarly, other polymeric materials and other resin compositions can be properly added within the range that would not impair the effects of the present invention. For example, as to the content proportion of the optional additives, the optional additives are properly contained within the range that would not impair the effects of the present invention, and the content proportion of the optional additives is, for example, preferably from 10% by mass or less, and more preferably 5% by mass or less, of the resin composition.

In addition, when the resin composition of the present invention contains an elastomeric resin, the resin composition can be optionally blended, in addition to those mentioned above, with various additives generally blended in tires and other rubbers as other components besides those mentioned above, such as fillers for reinforcements such as carbon black or silica ordinarily used in the rubber industries; various chemicals including, for example, a vulcanizing agent, a vulcanization accelerator, an aging inhibitor, a scorching inhibitor, zinc oxide, stearic acid, a process oil, a vegetable fat or oil, a plasticizer or the like in a conventional general amount within the range that would not impair the object of the present invention.

The resin composition of the present invention can be prepared without particular limitations, so long as the resin composition contains a thermoplastic resin or a curable resin, and a fine cellulose fiber composite. For example, raw materials containing a thermoplastic resin or a curable resin, and a fine cellulose fiber composite, and further optionally various additives may be mixed with a Henschel mixer or a co-rotating agitator, or melt-kneaded with a known kneader such as a tightly closed kneader, a single-screw or twin-screw extruder, or an open roller-type kneader.

One of the features of the resin composition of the present invention is in that heat resistance is excellent. Specifically, the weight loss after heating by a given method is preferably 3.7% by weight or less, more preferably 3.5% by weight or less, and even more preferably 3.0% by weight or less, and preferably 0.2% by weight or more, more preferably 0.3% by weight or more, and even more preferably 0.4% by weight or more. The weight loss can be measured in accordance with a method described in Examples set forth below.

Since the resin composition of the present invention has favorable workability and excellent heat resistance, the resin composition can be suitably used in various applications such as daily sundries, household electric appliance parts and automobile parts. Specifically, the resin composition can be suitably used in wrapping materials for daily sundries, cosmetics, household electric appliances, and the like; electronic materials constituting electronic parts and the like; food containers such as blistered packs and trays, and lids for lunch boxes; industrial trays used in transportation or protections of industrial parts; automobile parts such as dashboards, instrumental panels, and floor; and the like.

[Resin Molded Article]

The resin molded article can be produced by appropriately applying a known molding method such as extrusion-molding, injection-molding, press molding, casting molding, or solvent casting to the resin composition of the present invention. For example, a molded article according to the applications can be obtained by injecting or applying to a package, a substrate or the like, and drying to cure.

When a sheet-like molded article is produced, the thickness thereof is preferably 0.01 mm or more, more preferably 0.03 mm or more, more preferably more preferably 0.05 mm or more, more preferably 0.08 mm or more, and even more preferably 0.1 mm or more, from the viewpoint of workability, and preferably 1.5 mm or less, more preferably 1.0 mm or less, and even more preferably 0.5 mm or less.

Since the molded article of the resin composition of the present invention thus obtained has excellent mechanical strength, heat resistance, and dimensional stability as described later, the molded article can be suitably used in various applications listed in the above resin composition.

One of the features of the molded article of the resin composition of the present invention is in that the mechanical strength is excellent. Specifically, the storage modulus at 30°C is preferably 2.5 GPa or more, more preferably 2.8 GPa

or more, and even more preferably 3.0 GPa or more, and preferably 10.0 GPa or less, more preferably 8.0 GPa or less, and even more preferably 6.0 GPa or less. The storage modulus at 30°C can be measured in accordance with a method described in Examples set forth below.

One of the features of the molded article of the resin composition of the present invention is in that heat resistance is excellent. Specifically, the storage modulus at 200°C is preferably 205 MPa or more, more preferably 220 MPa or more, and even more preferably 250 MPa or more, and preferably 2,000 MPa or less, more preferably 1,000 MPa or less, and even more preferably 550 MPa or less. The storage modulus at 200°C can be measured in accordance with a method described in Examples set forth below.

One of the features of the molded article of the resin composition of the present invention is in that the dimensional stability is excellent. Specifically, the linear coefficient of expansion is preferably 63 ppm/K or less, more preferably 60 ppm/K or less, and even more preferably 55 ppm/K or less, and preferably 0.5 ppm/K or more, more preferably 3.0 ppm/K or less, and even more preferably 15 ppm/K or more. The linear coefficient of expansion can be measured in accordance with a method described in Examples set forth below.

## EXAMPLES

The present invention will be described more specifically by means of the following Examples. The examples are given solely for the purposes of illustration and are not to be construed as limitations of the present invention. Parts in Examples are parts by mass unless specified otherwise. Here, "ambient pressure" means 101.3 kPa, and "ambient temperature" means 25°C.

[Average Fiber Diameter, Average Fiber Length, and Average Aspect Ratio of Fine Cellulose Fibers and Fine Cellulose Fiber Composite]

Water is added to fine cellulose fibers or a fine cellulose fiber composite to provide a dispersion of which concentration is 0.0001% by mass. The dispersion is added dropwise to mica (mica), and dried to provide an observation sample. A fiber height of the cellulose fibers or the fine cellulose fiber composite in the observation sample is measured with an atomic force microscope (AFM), Nanoscope III Tapping mode AFM, manufactured by Digital Instrument, a probe used being Point Probe (NCH) manufactured by NANOSENSORS. During that measurement, 100 or more sets of fine cellulose fibers or fine cellulose fiber composites are extracted from a microscopic image in which the cellulose fibers or the cellulose fiber composite can be confirmed, and an average fiber diameter is calculated from the fiber heights of the fibers or the composite. An average fiber length is calculated from a distance from the direction of fibers. An average aspect ratio is calculated by an average fiber length/an average fiber diameter, and the standard deviation thereof is also calculated.

[Carboxy Group Contents of Fine Cellulose Fibers and Fine Cellulose Fiber Composite]

Fine cellulose fibers or a fine cellulose fiber composite with the mass of 0.5 g on a dry basis is placed in a 100 mL beaker, ion-exchanged water or a mixed solvent of methanol/water = 2/1 is added thereto to make up a total volume of 55 mL. Five milliliters of a 0.01 M aqueous sodium chloride solution is added thereto to provide a dispersion, and the dispersion is stirred until the fine cellulose fibers or the fine cellulose fiber composite is sufficiently dispersed. A 0.1 M hydrochloric acid is added to this dispersion to adjust its pH to 2.5 to 3, and a 0.05 M aqueous sodium hydroxide solution is added dropwise to the dispersion with an automated titration instrument manufactured by DKK-TOA CORPORATION under the trade name of "AUT-710," under the conditions of a waiting time of 60 seconds. The values of electroconductivity and a pH are measured every minute, and the measurements are continued up to a pH of 11 or so to obtain an electroconductivity curve. A titrated amount of sodium hydroxide is obtained from this electroconductivity curve, and the carboxy group content of the fine cellulose fibers or the fine cellulose fiber composite is calculated in accordance with the following formulas:

$$\text{Carboxy Group Content (mmol/g)} = \text{Titrated Amount of Sodium Hydroxide} \times \text{Aqueous Sodium Hydroxide Solution Concentration (0.05 M)/Mass of Cellulose Fibers (0.5 g)}$$

[Average Binding Amount and Introduction Ratio (Ionic Bonding) of Modifying Groups of Fine Cellulose Fiber Composite]

The binding amount of the modifying group is obtained by the following IR determination method, and an average binding amount and an introduction ratio were calculated in accordance with the following formulas. Specifically, the dried fine cellulose fibers or fine cellulose fiber composite is subjected to a measurement according to ATR method with an infrared absorption spectrophotometer (IR) Nicolet 6700 manufactured by Thermo Fisher Scientific K.K., and a binding amount of the modifying group and an introduction ratio are calculated in accordance with the following formula:

Binding Amount of Modifying Group (mmol/g) = [Carboxy Group Content of Fine Cellulose Fibers (mmol/g)] × [Peak Intensity at 1720 $cm^{-1}$ of Fine Cellulose Fibers - Peak Intensity at 1720 $cm^{-1}$ of Fine Cellulose Fiber Composite After Introduction of Modifying Group) ÷ Peak Intensity at 1720 $cm^{-1}$ of Fine Cellulose Fibers]

Peak Intensity at 1720 $cm^{-1}$: Peak intensity ascribed to a carbonyl group of the carboxylic acid

Introduction Ratio (%) of Modifying Group = {Binding Amount (mmol/g) of Modifying Group/Carboxy Group Content (mmol/g) in Fine Cellulose Fibers Before Introduction} × 100

[Amount of Fine Cellulose Fibers (Conversion Amount) in Fine Cellulose Fiber Composite (Ion Bonding)]

(1) In a case where a compound having a modifying group added is one kind

The amount of the fine cellulose fibers (conversion amount) is calculated by the following formula.

Amount of Fine Cellulose Fibers (g) = Amount of Fine Cellulose Fiber Composite (g)/[1 + Molecular Weight of Compound Having Modifying Group (g/mol) × Binding Amount of Modifying Group (mmol/g) × 0.001]

Here, in a case where a compound having a modifying group is a primary amine, a secondary amine, or a tertiary amine, the molecular weight of the compound having a modifying group is "a molecular weight of a compound having a modifying group overall including a copolymer moiety," and in a case where a compound having a modifying group is a quaternary ammonium compound or a phosphonium compound, the molecular weight is "a molecular weight of a compound having a modifying group overall including a copolymer moiety minus the molecular weight of anionic components."

(2) In a case where compounds having a modifying group added are two or more kinds

The amount of the fine cellulose fibers (conversion amount) is calculated, taking a molar proportion of the amount of each of the compounds having a modifying group (i.e., a molar ratio when a total molar amount of each of the compounds having a modifying group to be added is defined as 1) into consideration. The following formula is a formula for calculating the amount of the fine cellulose fibers (conversion amount) in a case where the compounds having a modifying group are two kinds (i.e. a first compound and a second compound), in which a molar proportion of a first compound to a second compound is such that a first compound : a second compound = 0.8:0.2.

$$\text{Amount of Fine Cellulose Fibers (g)} = \text{Amount of Fine Cellulose Fiber Composite (g)}/[1 + \text{Molecular Weight of First Compound (g/mol)} \times 0.8 \times \text{Binding Amount of Modifying Group (mmol/g)} \times 0.001 + \text{Molecular Weight of Second Compound (g/mol)} \times 0.2 \times \text{Binding Amount of Modifying Group (mmol/g)} \times 0.001]$$

Here, in a case where a compound having a modifying group is a primary amine, a secondary amine, or a tertiary amine, the molecular weight of the compound having a modifying group is "a molecular weight of a compound having a modifying group overall including a copolymer moiety," and in a case where a compound having a modifying group is a quaternary ammonium compound or a phosphonium compound, the molecular weight is "a molecular weight of a compound having a modifying group overall including a copolymer moiety minus the molecular weight of anionic components."

[Average Binding Amount and Introduction Ration (Amide Bonding) of Modifying Group of Fine Cellulose Fiber Composite]

The average binding amount of the modifying group is calculated by the following formula.

$$\text{Binding Amount of Modifying Group (mmol/g)} = \text{Carboxy Group Content in the Fine Cellulose Fibers Before Introduction of Modifying Group (mmol/g)} - \text{Carboxy Group Content in Fine Cellulose Fiber Composite After Introduction of Modifying Group (mmol/g)}$$

$$\text{Introduction Ratio of Modifying Group (\%)} = \{\text{Binding Amount of Modifying Group (mmol/g)} / \text{Carboxy Group Content (mmol/g) in Fine Cellulose Fibers Before Introduction}\} \times 100$$

[Amount of Fine Cellulose Fibers (Conversion Amount) in Fine Cellulose Fiber Composite (Amide Bonding)]

(1) In a case where a compound having a modifying group to be added is one kind

The amount of the fine cellulose fibers (conversion amount) is calculated by the following formula.

$$\text{Amount of Fine Cellulose Fibers (g)} = \text{Amount of Fine Cellulose Fiber Composite (g)} / [1 + \text{Molecular Weight of Compound Having Modifying Group (g/mol)} \times \text{Binding Amount of Modifying Group (mmol/g)} \times 0.001]$$

Here, in a case where a compound having a modifying group is a primary amine or a secondary amine, the molecular weight of the compound having a modifying group is "a molecular weight of a compound having a modifying

group overall including a copolymer moiety minus 18."

(2) In a case where compounds having a modifying group to be added are two or more kinds

The amount of the fine cellulose fibers (conversion amount) is calculated, taking a molar proportion of the amount of each of the compounds having a modifying group (i.e., a molar ratio when a total molar amount of each of the compounds having a modifying group to be added is defined as 1) into consideration. The following formula is a formula for calculating the amount of the fine cellulose fibers (conversion amount) in a case where the compounds having a modifying group are two kinds (i.e. a first compound and a second compound), in which a molar proportion of a first compound to a second compound is such that a first compound : a second compound = 0.8:0.2.

$$\text{Amount of Fine Cellulose Fibers (g)} = \text{Amount of Fine Cellulose Fiber Composite (g)}/[1 + \text{Molecular Weight of First Compound (g/mol)} \times 0.8 \times \text{Binding Amount of Modifying Group (mmol/g)} \times 0.001 + \text{Molecular Weight of Second Compound (g/mol)} \times 0.2 \times \text{Binding Amount of Modifying Group (mmol/g)} \times 0.001]$$

Here, in a case where a compound having a modifying group is a primary amine or a secondary amine, the molecular weight of the compound having a modifying group is "a molecular weight of a compound having a modifying group overall including a copolymer moiety minus 18."

Preparation Example 1 of Fine Cellulose Fibers - Needle-Leaf Oxidized Pulp

Needle-leaf bleached kraft pulp manufactured by Fletcher Challenge Canada Ltd., under the trade name of "Machenzie," CSF 650 ml, was used as natural cellulose fibers. As TEMPO, a commercially available product manufactured by ALDRICH, Free radical, 98% by mass, was used. As sodium hypochlorite, a commercially available product manufactured by Wako Pure Chemical Industries, Ltd. was used. As sodium bromide, a commercially available product manufactured by Wako Pure Chemical Industries, Ltd. was used.

First, 100 g of the needle-leaf bleached kraft pulp fibers were sufficiently stirred in 9,900 g of ion-exchanged water, and 1.6% by mass of TEMPO, 10% by mass of sodium bromide, and 28.4% by mass of sodium hypochlorite were added in that order to 100 g of the mass of the pulp. Using a pH stud titration with an automated titration instrument "AUT-701" manufactured by DKK-TOA CORPORATION, a 0.5 M sodium hydroxide was added dropwise to keep a pH at 10.5. After the reaction was carried out at 20°C for 120 minutes, the dropwise addition of sodium hydroxide was stopped, to provide oxidized pulp. The oxidized pulp obtained was sufficiently washed with ion-exchanged water, and subsequently subjected to a dehydration treatment, to provide oxidized pulp having a solid content of 34.6%. Thereafter, 1.04 g of the oxidized pulp and 34.8 g of ion-exchanged water were subjected to a finely fibrillating treatment with a high-pressure homogenizer at 150 MPa for 10 times, to provide a dispersion of carboxy group-containing fine cellulose fibers, a solid content concentration of which was 1.0% by mass. The resulting fine cellulose fibers had an average fiber diameter of 2.7 nm, an average fiber length of 578 nm, an average aspect ratio of 214, and a carboxy group content of 1.2 mmol/g.

Preparation Example 2 of Fine Cellulose Fibers - Broad-Leaf Oxidized Pulp

The same procedures as in Preparation Example 1 were carried out except for changing to broad-leaf bleached kraft pulp derived from eucalyptus manufactured by CENIBRA, to provide oxidized pulp. The resulting oxidized pulp was subjected to the same finely fibrillating treatment as in Preparation Example 1, to provide a dispersion of carboxy group-containing fine cellulose fibers, a solid content concentration of which was 1.0% by mass. The resulting fine cellulose fibers had an average fiber diameter of 3.5 nm, an average fiber length of 674 nm, an average aspect ratio of 193, and a carboxy group content of 1.0 mmol/g.

Preparation Example 3 of Fine Cellulose Fibers - Treatment of Lowering Aspect Ratio of Needle-Leaf Oxidized Pulp

The amount 92.54 g of the oxidized pulp after the dehydration treatment obtained in Preparation Example 1 was diluted with 1,000 g of ion-exchanged water, and 346 g (389 parts by mass based on 100 parts by mass of the mass of the cellulose-based raw materials on dry basis) of concentrated hydrochloric acid was added thereto, to provide a dispersion of oxidized pulp, a solid content concentration of which was 2.34 wt%, and a hydrochloric acid concentration of 2.5 M, pH being 1 or less. The dispersion was refluxed at 105°C for 10 minutes to carry out an acid hydrolysis treatment. The resulting oxidized pulp was sufficiently washed, to provide an acid hydrolyzed TEMPO oxidized pulp, a solid content of which was 41%. Thereafter, 0.88 g of the oxidized pulp and 35.12 g of ion-exchanged water were subjected to finely fibrillating treatments with a high-pressure homogenizer at 150 MPa for 10 times, to provide a dispersion of carboxy group-containing fine cellulose fibers having a low aspect ratio, a solid content concentration of which was 1.0% by mass. The fine cellulose fibers had an average fiber diameter of 4.6 nm, an average fiber length of 331 nm, an average aspect ratio of 72, and a carboxy group content of 1.1 mmol/g.

Preparation Example 4 of Fine Cellulose Fibers - Treatment of Lowering Aspect Ratio of Needle-Leaf Oxidized Pulp

The same procedures as in Preparation Example 3 were carried out except that the reflux time was changed to 60 minutes, to provide carboxy group-containing fine cellulose fibers having a low aspect ratio. The fine cellulose fibers had an average fiber diameter of 6.1 nm, an average fiber length of 284 nm, an average aspect ratio of 47, and a carboxy group content of 1.1 mmol/g.

Preparation Example 5 of Fine Cellulose Fibers - Treatment of Lowering Aspect Ratio of Needle-Leaf Oxidized Pulp

The same procedures as in Preparation Example 3 were carried out except that the reflux time was changed to 120 minutes, to provide carboxy group-containing fine cellulose fibers having a low aspect ratio. The fine cellulose fibers had an average fiber diameter of 7.5 nm, an average fiber length of 237 nm, an average aspect ratio of 32, and a carboxy group content of 1.1 mmol/g.

Preparation Example 6 of Fine Cellulose Fibers - Treatment of Lowering Aspect Ratio of Broad-Leaf Oxidized Pulp

The same procedures as in Preparation Example 3 were carried out except that the oxidized pulp obtained in Preparation Example 2 was used, to provide carboxy group-containing fine cellulose fibers having a low aspect ratio. The fine cellulose fibers had an average fiber diameter of 8.2 nm, an average fiber length of 213 nm, an average aspect ratio of 26, and a carboxy group content of 1.0 mmol/g.

Preparation Example 7 of Fine Cellulose Fibers - Treatment of Lowering Aspect Ratio of Needle-Leaf Oxidized Pulp

A metallic pressurizing instrument manufactured by TAIATSU TECHNO CORPORATION under the trade name of "Portable Reactor Model TVSN2" was charged with 14.5 g of oxidized pulp (solid content: 5 g) after the dehydration treatment obtained in Preparation Example 1 and 33.3 g of deionized water, and an internal of the metallic pressurizing instrument was pressed with 0.4 MPa [gage] of nitrogen gas, and then the pressure was recovered to an atmospheric pressure (101 kPa [abs]) (hereinafter, the procedures are referred to as nitrogen replacement). Further, the metallic pressurizing instrument was subjected to nitrogen replacement 4 times, and then the instrument was tightly sealed. Thereafter, under a non-stirring state, the metallic pressurizing instrument was heated with an oil bath until an internal vessel temperature reached 150°C, an oil bath temperature was then adjusted so that the internal vessel temperature of 150°C could be maintained, and the reaction was carried out for 1 hour. After cooling, the contents were taken out, and 120 g of ion-exchanged water was then added thereto and stirred. Thereafter, a filtration separation was carried out with a PTFE membrane filter, to provide 21.2 g of impregnated fine cellulose fibers. The fine cellulose fibers had an average fiber diameter of 6.3 nm, an average fiber length of 250 nm, an average aspect ratio of 40, and a carboxy group content of 1.1 mmol/g.

Preparation Example 8 of Fine Cellulose Fibers - Treatment of Lowering Aspect Ratio of Needle-Leaf Oxidized Pulp

The same procedures as in Preparation Example 3 were carried out except that the reflux time was changed to 5 minutes, to provide carboxy group-containing fine cellulose fibers having a low aspect ratio. The fine cellulose fibers had an average fiber diameter of 3.5 nm, an average fiber length of 458 nm, an average aspect ratio of 131, and a carboxy group content of 1.1 mmol/g.

Preparation Example 9 of Fine Cellulose Fibers - Treatment of Lowering Aspect Ratio of Needle-Leaf Oxidized Pulp

The amount 14.5 g (solid content: 5 g) of oxidized pulp after the hydration treatment obtained in Preparation Example 1 was weighed out as 5 g of dry mass, and supplied into a planetary ball-mill "P-6" manufactured by FRITCH, Germany: using pot made of zirconia and 300 g ball made of zirconia having a diameter of 10 mm, and subjected to a pulverization treatment at 400 rpm for 5 minutes to carry out the mechanical treatment. The resulting oxidized pulp was sufficiently washed, to provide oxidized pulp having a solid content of 41%. The amount 0.88 g of the resulting oxidized pulp and 35.12 g of ion-exchanged water were subjected to fine fibrillating treatments with a high-pressure homogenizer at 150 MPa for 10 times, to provide a dispersion of carboxy group-containing fine cellulose fibers having a low aspect ratio, a solid content concentration of which was 1.0% by mass. The fine cellulose fibers had an average fiber diameter of 3.9 nm, an average fiber length of 336 nm, an average aspect ratio of 86, and a carboxy group content of 1.1 mmol/g.

Preparation Example 10 of Fine Cellulose Fibers - Treatment of Lowering Aspect Ratio of Needle-Leaf Oxidized Pulp

The amount 14.5 g (solid content: 5 g) of oxidized pulp after the hydration treatment obtained in Preparation Example 1 was weighed out as 5 g of dry mass, and supplied into a batch-type vibrating mill manufactured by CHUO KAKOHKI CO., LTD "MB-1," vessel entire volume: 3.5 L, 13 rods made of SUS304 being used, each rod having a diameter φ of 30 mm, a length of 218 mm, and cross-sectional shape of circular, rod filling ratio of 57%, and subjected to a pulverization treatment for 10 minutes, to carry out the mechanical treatment. The resulting oxidized pulp was sufficiently washed, to provide oxidized pulp having a solid content of 41%. The amount 0.88 g of the resulting oxidized pulp and 35.12 g of ion-exchanged water were subjected to fine fibrillating treatments with a high-pressure homogenizer at 150 MPa for 10 times, to provide a dispersion of carboxy group-containing fine cellulose fibers having a low aspect ratio, a solid content concentration of which was 1.0% by mass. The fine cellulose fibers had an average fiber diameter of 4.2 nm, an average fiber length of 325 nm, an average aspect ratio of 77, and a carboxy group content of 1.1 mmol/g.

Preparation Example 11 of Fine Cellulose Fibers - Blend with Long Fibers

The amount 0.145 g (solid content: 0.05 g) of the oxidized pulp after the dehydration treatment obtained in Preparation Example 1, 1.0 g (solid content: 0.41 g) of the oxidized pulp after washing obtained in Preparation Example 5, and 42.1 g of ion-exchanged water were mixed, and a mixture was subjected to fine fibrillating treatments with a high-pressure homogenizer at 150 MPa for 10 times, to provide a dispersion of carboxy group-containing fine cellulose fibers having a low aspect ratio, a solid content concentration of which was 1.0% by mass. The fine cellulose fibers had an average fiber diameter of 7.0 nm, an average fiber length of 270 nm, an average aspect ratio of 38, and a carboxy group content of 1.1 mmol/g.

Production Example 1 of Fine Cellulose Fiber Composite - Binding Form: Ionic Bonding

A beaker equipped with a magnetic stirrer and a stirring bar was charged with 35 g of each of dispersions of fine cellulose fibers obtained in Preparation Examples shown in Tables 1, 2 and 4, a solid content concentration of which was 5% by mass. Subsequently, each of compounds having a modifying group of the kinds shown in Tables 1, 2 and 4 was charged in an amount corresponding to 1 mol of amine groups based on 1 mol of carboxy groups of the fine cellulose fibers, and dissolved in 300 g of DMF. The reaction mixture was reacted at room temperature (25°C) for 1 hour. After the termination of the reaction, the mixture was filtered, and washed with DMF, to provide a fine cellulose fiber composite in which amine groups are bound to fine cellulose fibers.

Production Example 2 of Fine Cellulose Fiber Composite - Binding Form: Amide Bonding

A beaker equipped with a magnetic stirrer and a stirring bar was charged with 40 g of a dispersion of carboxy group-containing fine cellulose fibers obtained in Preparation Example 1 or 3 of Fine Cellulose Fibers, a solid content concentration of which was 5.0% by mass. Subsequently, the beaker was charged with an amine of the kind as listed in Table 3 (each being a commercially available product) in an amount corresponding to 1.2 mol of amine groups based on 1 mol of the carboxy groups of the fine cellulose fibers, 0.34 g of 4-methylmorpholine, and 1.98 g of a condensing agent DMT-MM, and dissolved in 300 g of DMF. A liquid reaction mixture was reacted at room temperature (25°C) for 14 hours. After the termination of reaction, the reaction mixture was filtered, and washed with ethanol to remove a DMT-MM salt, washed with DMF, and subjected to solvent replacement, thereby providing a fine cellulose fiber composite in which an aliphatic hydrocarbon group, an EOPO copolymer, or an aromatic hydrocarbon group is connected to fine cellulose fibers via an amide bonding.

Production Example 3 of Fine Cellulose Fiber Composite - Dual Grafting

A beaker equipped with a magnetic stirrer and a stirring bar was charged with 35 g of a dispersion of fine cellulose fibers obtained in Preparation Example 3, a solid content concentration of which was 5% by mass. Subsequently, the beaker was charged with a compound having a modifying group of the kind as listed in Table 5 or 6 in an amount each corresponding to 0.8 mol of primary amine groups (Compound (1) of Table 5 or 6) and 0.2 mol of secondary amine groups (Compound (2) of Table 5 or 6), based on 1 mol of the carboxy groups of the fine cellulose fibers, and dissolved in 300 g of DMF. The liquid reaction mixture was reacted at room temperature (25°C) for 1 hour. After the termination of the reaction, the reaction mixture was filtered, and washed with DMF, to provide a fine cellulose fiber composite in which two kinds of amine groups are bound to the fine cellulose fibers.

Here, the dispersion of fine cellulose fibers used in the above Production Examples 1 to 3, a solid content concentration of which was 5.0% by mass was prepared as follows. Two-thousand grams of a dispersion of carboxy group-containing fine cellulose fibers obtained in the above Preparation Example 1, a solid content concentration of which was 1.0% by mass, was stirred with a mechanical stirrer at room temperature (25°C) for 30 minutes. Subsequently, 245 g of a 1 M aqueous hydrochloric acid solution was supplied thereto, and the mixture was stirred at room temperature for one hour to react. After the termination of the reaction, the reaction mixture was filtered and washed with ion-exchanged water, to remove hydrochloric acid and salts. Thereafter, the reaction mixture was subjected to solvent replacement with DMF, to provide a dispersion of fine cellulose fibers corresponding to Preparation Example 1, in which the carboxy group-containing fine cellulose fibers are in a swollen state in DMF, a solid content concentration of which was 5.0% by mass. The same treatments were carried out for Preparation Examples 2 to 11, to provide a dispersion of each of fine cellulose fibers, a solid content concentration of which was 5.0% by mass.

< Compound Having Modifying Group >

TBAH: Tetrabutylammonium hydroxide manufactured by Wako Pure Chemical Industries, Ltd.
Propylamine: manufactured by Wako Pure Chemical Industries, Ltd.
Dodecylamine: manufactured by Wako Pure Chemical Industries, Ltd.
Octadecylamine: manufactured by Wako Pure Chemical Industries, Ltd.
Dihexylamine: manufactured by Wako Pure Chemical Industries, Ltd.
Trioctylamine: manufactured by Wako Pure Chemical Industries, Ltd.
Dimethylbehenylamine: manufactured by Kao Corporation, FARMIN DM2285
Aniline: manufactured by Wako Pure Chemical Industries, Ltd.
EOPO Amine: Amine obtained by Production Example 4 shown below

Production Example 4 of Amine Having EO/PO Copolymer Moiety - EOPO Copolymer Amine

A 1-L autoclave was charged with 132 g (1 mol) of propylene glycol tertiary butyl ether, the content was heated to 75°C, 1.2 g of a flake-like potassium hydroxide was added thereto, and the mixture was stirred to dissolve. Next, 1,541 g of ethylene oxide (EO) and 35 g of propylene oxide (PO) were reacted at 110°C and 0.34 MPa, and 7.14 g of MAGNESOL 30/40, magnesium silicate, manufactured by The Dallas Group of America, was then supplied thereto and neutralized at 95°C. To the formed product obtained was added 0.16 g of di-tert-butyl-p-cresol, and mixed, and the mixture obtained was then filtered, to provide an EO/PO copolymer a polyether.

On the other hand, the polyether obtained above (8.4mL/min), ammonia (12.6 mL/min), and hydrogen (0.8 mL/min) were each supplied to a 1.250 mL tubular reaction vessel packed with a catalyst of nickel oxide/copper oxide/chromium oxide in a molar ratio of 75/23/2, manufactured by Wako Pure Chemical Industries, Ltd. The temperature of the vessel was maintained at 190°C, and the pressure was maintained at 14 MPa. Therefore, a crude discharged liquid mixture from the vessel was distilled off at 70°C and 3.5 mmHg for 30 minutes. A flask was charged with 200 g of an amino-added polyether obtained and 93.6 g of a 15% aqueous hydrochloric acid solution, the reaction mixture was heated at 100°C for 3.75 hours, to open tertiary butyl ether with the acid. Moreover, the formed product was neutralized with a 15% aqueous potassium hydroxide solution. Next, a neutralized formed product was distilled off under a reduced pressure at 112°C for one hour, and a residue was filtered, to provide a monoamine having an EO/PO copolymer moiety represented by the formula (i). Here, in the monoamine obtained, the EO/PO copolymer moiety is directly bound to the amine, so that $R_1$ in the formula (i) is a hydrogen atom.

Here, the molecular weight of the amine copolymer moiety is calculated as 2,000 by rounding off the value obtained by:

1541 [Molecular Weight of EO(44) × Number of Moles of EO Added(35)] + 464 [Molecular Weight of PO(58) × Number of Moles of PO Added(8.0)] + 58 [Partial Molecular Weight of PO of Starting Raw Materials (Propylene Glycol)] = 2063.

Examples 1 to 36 and Comparative Examples 1 to 7 <Thermosetting Resins>

A given amount of a fine cellulose fiber composite obtained in Production Examples 1 to 3 of Fine Cellulose Fiber Composite, i.e. calculated as 1.12 g on fine cellulose fibers basis, 8.0 g of an epoxy resin jER828 manufactured by Mitsubishi Chemical Corporation, and DMF were mixed. The mixture was subjected to a finely fibrillating treatment using a high-pressure homogenizer under conditions of at 100 MPa in one pass, and then at 150 MPa in two passes. To a solution obtained was added 0.4 g of 2-ethyl-4-methylimidazole manufactured by Wako Pure Chemical Industries, Ltd. as a curing agent, and the mixture was stirred with a planetary centrifugal agitator Awatori Rentaro manufactured by THINKY CORPORATION for 7 minutes. The varnish obtained was applied in a coating thickness of 0.4 mm using a bar coater, and dried at 80°C for 1 hour, to remove the solvents. Thereafter, the coating film was thermally cured at 150°C for 1 hour, to provide a sheet-like molded article having a thickness of about 0.1 mm.

Referential Example 1

The same procedures as in Example 1 were carried out except that the fine cellulose fiber composite was not added, and that a coating film thickness was changed to 0.1 mm to provide a molded article.

The properties of the resin compositions (coatings) and the molded articles (coating films) obtained were evaluated in accordance with the methods of Test Examples 1 to 3 give hereinbelow. The results are shown in Tables 1 to 6.

Test Example 1 - Storage Modulus

Using a dynamic viscoelastometer manufactured by SII, under the trade name of "DMS6100," rectangular samples having sizes of a width of 5 mm and a length of 20 mm were subjected to measurement in a tensile mode under nitrogen atmosphere at a frequency of 1 Hz, while raising the temperature from 30° to 300°C at a rate of 10°C per minute. As the storage modulus, the values at 30°C and 200°C were used. It is shown that the higher the storage modulus at 30°C, the more excellent the mechanical strength, and that the higher the storage modulus at 200°C, the more excellent the heat resistance.

Test Example 2 - Coefficient of Linear Thermal Expansion

Using a thermal stress-strain measurement apparatus manufactured by Hitachi High-Tech Science Corporation, under the trade name of "EXSTAR TMA/SS6100," rectangular samples having sizes of a width of 5 mm and a length of 20 mm were measured at a tensile mode with a load of 30 mN while raising the temperature at a rate of 5°C per minute under nitrogen atmosphere. The coefficient of linear thermal expansion was obtained by calculating an average coefficient of linear thermal expansion within the temperature range of from room temperature, 30°C, to 100°C. It is shown that the lower the coefficient of the linear thermal expansion, the more excellent the dimensional stability.

Test Example 3 - Weight Loss

Using a thermal analyzer manufactured by Hitachi High-Tech Science Corporation under the trade name of "STA7200," a weight loss obtained by placing an about 1 mg sample on an aluminum pan, raising the temperature under a nitrogen atmosphere from 30°C to 200°C at a rate of 40°C per minute, and holding the temperature at 200°C for 60 minutes was measured. As to the weight loss, while there are some cases where the differences cannot be well seen, it is shown that the smaller the weight loss, the more excellent the heat resistance.

[Table 1]

Table 1

| | | | Ex. | | | | | | | | |
|---|---|---|---|---|---|---|---|---|---|---|---|
| | | | 1 | 2 | 3 | 4 | 5 | 6 | 7 | 8 | 9 |
| Fine Cellulose Fiber Composite | Fine Cellulose Fibers | Preparation Ex. | 3 | 4 | 5 | 6 | 7 | 3 | 3 | 3 | 3 |
| | | Method for Lowering Aspect Ratio | Acid Hydrolysis | Acid Hydrolysis | Acid Hydrolysis | Acid Hydrolysis | Hydrothermal Decomposition | Acid Hydrolysis | Acid Hydrolysis | Acid Hydrolysis | Acid Hydrolysis |
| | | Raw Material Cellulose Fibers | Needle-Leaf Pulp | Needle-Leaf Pulp | Needle-Leaf Pulp | Broad-Leaf Pulp | Needle-Leaf Pulp | Needle-Leaf Pulp | Needle-Leaf Pulp | Needle-Leaf Pulp | Needle-Leaf Pulp |
| | | Carboxy Group Content, mmol/g | 1.1 | 1.1 | 1.1 | 1.0 | 1.1 | 1.1 | 1.1 | 1.1 | 1.1 |
| | | Average Fiber Length, nm | 331 | 284 | 237 | 213 | 250 | 331 | 331 | 331 | 331 |
| | | Average Fiber Diameter, nm | 4.6 | 6.1 | 7.5 | 8.2 | 6.3 | 4.6 | 4.6 | 4.6 | 4.6 |
| | | Average Aspect Ratio | 72 | 47 | 32 | 26 | 40 | 72 | 72 | 72 | 72 |
| | | Standard Deviations of Aspect Ratio | 43 | 11 | 5 | 5 | 8 | 43 | 43 | 43 | 43 |
| | Binding Form | | Ionic Bonding | Ionic Bonding | Ionic Bonding | Ionic Bonding | Ionic Bonding | Ionic Bonding | Ionic Bonding | Ionic Bonding | Ionic Bonding |

(continued)

| | | Ex. | | | | | | | | |
|---|---|---|---|---|---|---|---|---|---|---|
| | | 1 | 2 | 3 | 4 | 5 | 6 | 7 | 8 | 9 |
| | Compound Used | TBAH | TBAH | TBAH | TBAH | TBAH | Propylamine | Dodecylamine | EOPO amine | Aniline |
| | Binding Amount of Modifying Group, mmol/g | 1.1 | 1.1 | 1.1 | 1.0 | 1.1 | 1.1 | 1.1 | 1.1 | 0.7 |
| | Average Fiber Length, nm | 320 | 280 | 240 | 210 | 245 | 330 | 329 | 325 | 327 |
| | Average Fiber Diameter, nm | 4.5 | 6.2 | 7.6 | 8.1 | 5.5 | 4.6 | 4.7 | 5.0 | 4.6 |
| | Average Aspect Ratio | 71 | 45 | 32 | 26 | 45 | 72 | 70 | 65 | 71 |
| | Standard Deviations of Aspect Ratio | 43 | 12 | 5 | 5 | 10 | 43 | 44 | 47 | 43 |
| Amount of Epoxy Resin, Parts by Mass | | 100 | 100 | 100 | 100 | 100 | 100 | 100 | 100 | 100 |
| Amount of Fine Cellulose Fiber Composite, Parts by Mass | | 17.8 | 17.8 | 17.8 | 17.4 | 17.8 | 15.0 | 16.8 | 44.8 | 14.8 |
| Amount of Fine Cellulose Fibers, Parts by Mass, Calculated Amount | | 14 | 14 | 14 | 14 | 14 | 14 | 14 | 14 | 14 |
| Physical Properties of Molded Article/ Resin Composition | Storage Modulus at 30°C, ×GPa | 3.7 | 4.1 | 4.9 | 4.9 | 4.3 | 3.3 | 3.5 | 3.1 | 3.3 |
| | Storage Modulus at 200°C, ×MPa | 390 | 320 | 280 | 280 | 300 | 235 | 280 | 210 | 240 |
| | Coefficient of Linear Thermal Expansion, ppm/K | 60 | 60 | 60 | 60 | 60 | 62 | 61 | 63 | 62 |
| | Weight Loss at 200°C After 1 Hour, wt% | 2.5 | 2.7 | 3.1 | 3.7 | 2.9 | 0.5 | 1.8 | 0.8 | 0.6 |

*TBAH: tetrabutylammonium hydroxide

[Table 2]

Table 2

| | | | Ref. Ex. | Comp. Ex. | | | |
|---|---|---|---|---|---|---|---|
| | | | 1 | 1 | 2 | 3 | 4 |
| Fine Cellulose Fiber Composite | Fine Cellulose Fibers | Preparation Ex. | - | 1 | 1 | 1 | 1 |
| | | Method for Lowering Aspect Ratio | - | - | - | - | - |
| | | Raw Material Cellulose Fibers | - | Needle-Leaf Pulp | Needle-Leaf Pulp | Needle-Leaf Pulp | Needle-Leaf Pulp |
| | | Carboxy Group Content, mmol/g | - | 1.2 | 1.2 | 1.2 | 1.2 |
| | | Average Fiber Length, nm | - | 578 | 578 | 578 | 578 |
| | | Average Fiber Diameter, nm | - | 2.7 | 2.7 | 2.7 | 2.7 |
| | | Average Aspect Ratio | - | 214 | 214 | 214 | 214 |
| | | Standard Deviations of Aspect Ratio | - | 64 | 64 | 64 | 64 |
| | Binding Form | | - | Ionic Bonding | Ionic Bonding | Ionic Bonding | Ionic Bonding |
| | Compound Used | | - | TBAH | Propylamine | EOPO amine | Aniline |
| | Binding Amount of Modifying Group, mmol/g | | - | 1.2 | 1.2 | 1.2 | 0.7 |
| | Average Fiber Length, nm | | - | 575 | 576 | 575 | 568 |
| | Average Fiber Diameter, nm | | - | 2.7 | 2.7 | 2.8 | 2.9 |
| | Average Aspect Ratio | | - | 213 | 213 | 205 | 196 |
| | Standard Deviations of Aspect Ratio | | - | 64 | 63 | 62 | 63 |
| Amount of Epoxy Resin, Parts by Mass | | | 100 | 100 | 100 | 100 | 100 |
| Amount of Fine Cellulose Fiber Composite, Parts by Mass | | | 0 | 18 | 15.1 | 47.6 | 14.9 |
| Amount of Fine Cellulose Fibers, Parts by Mass, Calculated Amount | | | - | 14 | 14 | 14 | 14 |

(continued)

| | | Ref. Ex. | Comp. Ex. | | | |
|---|---|---|---|---|---|---|
| | | 1 | 1 | 2 | 3 | 4 |
| Physical Properties of Molded Article/ Resin Composition | Storage Modulus at 30°C, ×GPa | 1.8 | 2 | 1.8 | 1.7 | 1.8 |
| | Storage Modulus at 200°C, ×MPa | 90 | 170 | 180 | 162 | 185 |
| | Coefficient of Linear Thermal Expansion, ppm/K | 81 | 65 | 68 | 70 | 66 |
| | Weight Loss at 200°C After 1 Hour, wt% | 0.2 | 5.0 | 1.0 | 1.7 | 1.5 |
| *TBAH: tetrabutylammonium hydroxide | | | | | | |

[Table 3]

Table 3

| | | | Ex. | | | Comp. Ex. | | |
|---|---|---|---|---|---|---|---|---|
| | | | 10 | 11 | 12 | 5 | 6 | 7 |
| Fine Cellulose Fiber Composite | Fine Cellulose Fibers | Preparation Ex. | 3 | 3 | 3 | 1 | 1 | 1 |
| | | Method for Lowering Aspect Ratio | Acid Hydrolysis | Acid Hydrolysis | Acid Hydrolysis | Acid Hydrolysis | Acid Hydrolysis | Acid Hydrolysis |
| | | Raw Material Cellulose Fibers | Needle-Leaf Pulp | Needle-Leaf Pulp | Needle-Leaf Pulp | Needle-Leaf Pulp | Needle-Leaf Pulp | Needle-Leaf Pulp |
| | | Carboxy Group Content, mmol/g | 1.1 | 1.1 | 1.1 | 1.2 | 1.2 | 1.2 |
| | | Average Fiber Length, nm | 331 | 331 | 331 | 578 | 578 | 578 |
| | | Average Fiber Diameter, nm | 4.6 | 4.6 | 4.6 | 2.7 | 2.7 | 2.7 |
| | | Average Aspect Ratio | 72 | 72 | 72 | 214 | 214 | 214 |
| | | Standard Deviations of Aspect Ratio | 43 | 43 | 43 | 64 | 64 | 64 |
| | Binding Form | | Amide Bonding | Amide Bonding | Amide Bonding | Amide Bonding | Amide Bonding | Amide Bonding |
| | Compound Used | | Propylamine | EOPO amine | Aniline | Propylamine | EOPO amine | Aniline |
| | Binding Amount of Modifying Group, mmol/g | | 0.8 | 0.8 | 0.8 | 0.9 | 0.9 | 0.9 |
| | Average Fiber Length, nm | | 330 | 329 | 328 | 571 | 576 | 575 |
| | Average Fiber Diameter, nm | | 4.6 | 4.9 | 4.6 | 2.7 | 2.7 | 2.9 |
| | Average Aspect Ratio | | 72 | 67 | 71 | 211 | 213 | 198 |
| | Standard Deviations of Aspect Ratio | | 43 | 48 | 44 | 65 | 63 | 64 |
| Amount of Epoxy Resin, Parts by Mass | | | 100 | 100 | 100 | 100 | 100 | 100 |
| Amount of Fine Cellulose Fiber Composite, Parts by Mass | | | 14.7 | 36.4 | 15.0 | 14.8 | 39.2 | 15.1 |

(continued)

| | | Ex. | | | Comp. Ex. | | |
|---|---|---|---|---|---|---|---|
| | | 10 | 11 | 12 | 5 | 6 | 7 |
| Amount of Fine Cellulose Fibers, Parts by Mass, Calculated Amount | | 14 | 14 | 14 | 14 | 14 | 14 |
| Physical Properties of Molded Article/ Resin Composition | Storage Modulus at 30°C, ×GPa | 3.5 | 3.3 | 3.5 | 1.9 | 1.8 | 1.9 |
| | Storage Modulus at 200°C, ×MPa | 260 | 230 | 265 | 200 | 177 | 204 |
| | Coefficient of Linear Thermal Expansion, ppm/K | 61 | 62 | 61 | 66 | 68 | 64 |
| | Weight Loss at 200°C After 1 Hour, wt% | 0.4 | 0.7 | 0.7 | 0.9 | 1.6 | 1.4 |

[Table 4]

Table 4

| | | | Ex. | | | | | | | |
|---|---|---|---|---|---|---|---|---|---|---|
| | | | 13 | 14 | 15 | 16 | 17 | 18 | 19 | 20 |
| Fine Cellulose Fiber Composite | Fine Cellulose Fibers | Preparation Ex. | 3 | 3 | 3 | 3 | 8 | 9 | 10 | 11 |
| | | Method for Lowering Aspect Ratio | Acid Hydrolysis | Acid Hydrolysis | Acid Hydrolysis | Acid Hydrolysis | Acid Hydrolysis | Mechanical Pulverization | Mechanical Pulverization | Acid Hydrolysis |
| | | Raw Material Cellulose Fibers | Needle-Leaf Pulp | Needle-Leaf Pulp | Needle-Leaf Pulp | Needle-Leaf Pulp | Needle-Leaf Pulp | Needle-Leaf Pulp | Needle-Leaf Pulp | Needle-Leaf Pulp |
| | | Carboxy Group Content, mmol/g | 1.1 | 1.1 | 1.1 | 1.1 | 1.1 | 1.1 | 1.1 | 1.1 |
| | | Average Fiber Length, nm | 331 | 331 | 331 | 331 | 458 | 336 | 325 | 270 |
| | | Average Fiber Diameter, nm | 4.6 | 4.6 | 4.6 | 4.6 | 3.5 | 3.9 | 4.2 | 7.0 |
| | | Average Aspect Ratio | 72 | 72 | 72 | 72 | 131 | 86 | 77 | 38 |
| | | Standard Deviations of Aspect Ratio | 43 | 43 | 43 | 43 | 52 | 51 | 48 | 8 |
| | Binding Form | | Ionic Bonding | Ionic Bonding | Ionic Bonding | Ionic Bonding | Ionic Bonding | Ionic Bonding | Ionic Bonding | Ionic Bonding |
| | Compound Used | | Octadecylamine | Dimethylbehenylamine | Dihexylamine | Trioctylamine | TBAH | TBAH | TBAH | TBAH |
| | Binding Amount of Modifying Group, mmol/g | | 1.1 | 1.1 | 1.1 | 1.1 | 1.1 | 1.1 | 1.1 | 1.1 |

(continued)

| | | Ex. | | | | | | | |
|---|---|---|---|---|---|---|---|---|---|
| | | 13 | 14 | 15 | 16 | 17 | 18 | 19 | 20 |
| | Average Fiber Length, nm | 331 | 331 | 330 | 330 | 451 | 335 | 324 | 271 |
| | Average Fiber Diameter, nm | 4.7 | 4.7 | 4.6 | 4.6 | 3.6 | 4 | 4.5 | 7.1 |
| | Average Aspect Ratio | 70 | 70 | 72 | 72 | 125 | 84 | 72 | 38 |
| | Standard Deviations of Aspect Ratio | 45 | 44 | 43 | 44 | 50 | 49 | 45 | 9 |
| Amount of Epoxy Resin, Parts by Mass | | 100 | 100 | 100 | 100 | 100 | 100 | 100 | 100 |
| Amount of Fine Cellulose Fiber Composite, Parts by Mass | | 18.2 | 19.2 | 16.8 | 19.5 | 17.8 | 17.8 | 17.8 | 17.8 |
| Amount of Fine Cellulose Fibers, Parts by Mass, Calculated Amount | | 14 | 14 | 14 | 14 | 14 | 14 | 14 | 14 |
| Physical Properties of Molded Article/ Resin Composition | Storage Modulus at 30°C, ×GPa | 3.4 | 3.3 | 2.8 | 3.0 | 3.0 | 3.5 | 3.6 | 3.3 |
| | Storage Modulus at 200°C, ×MPa | 273 | 252 | 207 | 209 | 270 | 377 | 380 | 245 |
| | Coefficient of Linear Thermal Expansion, ppm/K | 62 | 63 | 63 | 63 | 63 | 60 | 60 | Undetermined |
| | Weight Loss at 200°C After 1 Hour, wt% | 1.3 | 1.2 | 1.8 | 1.2 | 3.6 | 2.6 | 2.6 | Undetermined |

[Table 5]

Table 5

| | | | Ex. | | | | | | | |
|---|---|---|---|---|---|---|---|---|---|---|
| | | | 21 | 22 | 23 | 24 | 25 | 26 | 27 | 28 |
| Fine Cellulose Fiber Composite | Fine Cellulose Fibers | Preparation Ex. | 3 | 3 | 3 | 3 | 3 | 3 | 3 | 3 |
| | | Method for Lowering Aspect Ratio | Acid Hydrolysis | Acid Hydrolysis | Acid Hydrolysis | Acid Hydrolysis | Acid Hydrolysis | Acid Hydrolysis | Acid Hydrolysis | Acid Hydrolysis |
| | | Raw Material Cellulose Fibers | Needle-Leaf Pulp | Needle-Leaf Pulp | Needle-Leaf Pulp | Needle-Leaf Pulp | Needle-Leaf Pulp | Needle-Leaf Pulp | Needle-Leaf Pulp | Needle-Leaf Pulp |
| | | Carboxy Group Content, mmol/g | 1.1 | 1.1 | 1.1 | 1.1 | 1.1 | 1.1 | 1.1 | 1.1 |
| | | Average Fiber Length, nm | 331 | 331 | 331 | 331 | 331 | 331 | 331 | 331 |
| | | Average Fiber Diameter, nm | 4.6 | 4.6 | 4.6 | 4.6 | 4.6 | 4.6 | 4.6 | 4.6 |
| | | Average Aspect Ratio | 72 | 72 | 72 | 72 | 72 | 72 | 72 | 72 |
| | | Standard Deviations of Aspect Ratio | 43 | 43 | 43 | 43 | 43 | 43 | 43 | 43 |
| | Binding Form | | Ionic Bonding | Ionic Bonding | Ionic Bonding | Ionic Bonding | Ionic Bonding | Ionic Bonding | Ionic Bonding | Ionic Bonding |
| | Compound Used (1) | | Propylamine | Dodecylamine | Dihexylamine | Trioctylamine | TBAH | Aniline | Dodecylamine | Dodecylamine |

(continued)

| | | Ex. | | | | | | | |
|---|---|---|---|---|---|---|---|---|---|
| | | 21 | 22 | 23 | 24 | 25 | 26 | 27 | 28 |
| | Compound Used (2) | EOPO amine | EOPO amine | EOPO amine | EOPO amine | EOPO amine | EOPO amine | Dihexylamine | Trioctylamine |
| | Binding Amount of Modifying Group, mmol/g | 1.1 | 1.1 | 1.1 | 1.1 | 1.1 | 1.1 | 1.1 | 1.1 |
| | Average Fiber Length, nm | 330 | 331 | 331 | 332 | 329 | 330 | 331 | 333 |
| | Average Fiber Diameter, nm | 4.9 | 4.8 | 4.8 | 4.7 | 4.8 | 4.8 | 4.6 | 4.6 |
| | Average Aspect Ratio | 67 | 69 | 69 | 71 | 69 | 69 | 72 | 72 |
| | Standard Deviations of Aspect Ratio | 40 | 41 | 40 | 44 | 40 | 43 | 41 | 42 |
| Amount of Epoxy Resin, Parts by Mass | | 100 | 100 | 100 | 100 | 100 | 100 | 100 | 100 |
| Amount of Fine Cellulose Fiber Composite, Parts by Mass | | 20.9 | 22.4 | 22.4 | 24.5 | 23.1 | 20.9 | 16.9 | 17.4 |
| Amount of Fine Cellulose Fibers, Parts by Mass, Calculated Amount | | 14 | 14 | 14 | 14 | 14 | 14 | 14 | 14 |
| Physical Properties of Molded Article/ Resin Composition | Storage Modulus at 30°C, ×GPa | 4.6 | 4.6 | 4.5 | 4.3 | 4.8 | 4.6 | 4.4 | 4.5 |
| | Storage Modulus at 200°C, ×MPa | 470 | 475 | 453 | 430 | 487 | 455 | 430 | 450 |
| | Coefficient of Linear Thermal Expansion, ppm/K | 39 | 38 | 41 | 47 | 35 | 40 | 45 | 42 |
| | Weight Loss at 200°C After 1 Hour, wt% | 0.8 | 1 | 2.4 | 0.9 | 1.2 | 0.8 | 1.8 | 1.4 |

[Table 6]

Table 6

| | | | Ex. | | | | | | | |
|---|---|---|---|---|---|---|---|---|---|---|
| | | | 29 | 30 | 31 | 32 | 33 | 34 | 35 | 36 |
| | Fine Cellulose Fibers | Preparation Ex. | 3 | 3 | 3 | 3 | 3 | 3 | 3 | 3 |
| | | Method for Lowering Aspect Ratio | Acid Hydrolysis | Acid Hydrolysis | Acid Hydrolysis | Acid Hydrolysis | Acid Hydrolysis | Acid Hydrolysis | Acid Hydrolysis | Acid Hydrolysis |
| | | Raw Material Cellulose Fibers | Needle-Leaf Pulp | Needle-Leaf Pulp | Needle-Leaf Pulp | Needle-Leaf Pulp | Needle-Leaf Pulp | Needle-Leaf Pulp | Needle-Leaf Pulp | Needle-Leaf Pulp |
| | | Carboxy Group Content, mmol/g | 1.1 | 1.1 | 1.1 | 1.1 | 1.1 | 1.1 | 1.1 | 1.1 |
| | | Average Fiber Length, nm | 331 | 331 | 331 | 331 | 331 | 331 | 331 | 331 |
| | | Average Fiber Diameter, nm | 4.6 | 4.6 | 4.6 | 4.6 | 4.6 | 4.6 | 4.6 | 4.6 |
| | | Average Aspect Ratio | 72 | 72 | 72 | 72 | 72 | 72 | 72 | 72 |
| | | Standard Deviations of Aspect Ratio | 43 | 43 | 43 | 43 | 43 | 43 | 43 | 43 |
| | Binding Form | | Ionic Bonding | Ionic Bonding | Ionic Bonding | Ionic Bonding | Ionic Bonding | Ionic Bonding | Ionic Bonding | Ionic Bonding |

(continued)

| | | Ex. | | | | | | | |
|---|---|---|---|---|---|---|---|---|---|
| | | 29 | 30 | 31 | 32 | 33 | 34 | 35 | 36 |
| Fine Cellulose Fiber Composite | Compound Used (1) | Dodecylamine | Dihexylamine | Dihexylamine | Trioctylamine | Aniline | Aniline | Aniline | Aniline |
| | Compound Used (2) | TBAH | Trioctylamine | TBAH | TBAH | Dodecylamine | Dihexylamine | Trioctylamine | TBAH |
| | Binding Amount of Modifying Group, mmol/g | 1.1 | 1.1 | 1.1 | 1.1 | 1.1 | 1.1 | 1.1 | 1.1 |
| | Average Fiber Length, nm | 331 | 331 | 332 | 331 | 333 | 329 | 330 | 330 |
| | Average Fiber Diameter, nm | 4.5 | 4.6 | 4.5 | 4.6 | 4.5 | 4.6 | 4.5 | 4.5 |
| | Average Aspect Ratio | 74 | 72 | 74 | 72 | 74 | 72 | 73 | 73 |
| | Standard Deviations of Aspect Ratio | 40 | 43 | 42 | 40 | 41 | 43 | 42 | 40 |
| Amount of Epoxy Resin, Parts by Mass | | 100 | 100 | 100 | 100 | 100 | 100 | 100 | 100 |
| Amount of Fine Cellulose Fiber Composite, Parts by Mass | | 17.0 | 17.4 | 17.0 | 19.1 | 15.3 | 15.3 | 15.8 | 15.5 |
| Amount of Fine Cellulose Fibers, Parts by Mass, Calculated Amount | | 14 | 14 | 14 | 14 | 14 | 14 | 14 | 14 |
| Physical Properties of Molded Article/ Resin Composition | Storage Modulus at 30°C, ×GPa | 4.9 | 4.1 | 4.5 | 4.6 | 4.7 | 4.3 | 4.4 | 4.8 |
| | Storage Modulus at 200°C, ×MPa | 510 | 398 | 453 | 468 | 480 | 420 | 440 | 502 |
| | Coefficient of Linear Thermal Expansion , ppm/K | 29 | 54 | 41 | 39 | 37 | 48 | 45 | 33 |
| | Weight Loss at 200°C After 1 Hour, wt% | 2.4 | 1.3 | 2.4 | 2.3 | 1.5 | 1.7 | 1.1 | 2.2 |

It can be seen from the above that the resin composition containing a fine cellulose fiber composite of the present invention has excellent heat resistance, and that the molded article of the resin composition has excellent mechanical strength under ambient temperature, and high strength under high temperature and has excellent heat resistance, and excellent dimensional stability.

INDUSTRIAL APPLICABILITY

The resin composition containing a fine cellulose fiber composite of the present invention has excellent heat resistance, and the molded article of this resin composition has excellent mechanical strength, heat resistance, and dimensional stability. Accordingly, the present invention can be suitably used in various industrial applications such as daily sundries, household electric appliance parts, wrapping materials for household electric appliance parts, and automobile parts.

## Claims

**1.** A fine cellulose fiber composite in which a modifying group is bound to a carboxy group of fine cellulose fibers, wherein the modifying group is a hydrocarbon group and/or a copolymer moiety,
the fine cellulose fibers having a carboxy group content of 0.1 mmol/g or more, wherein the fine cellulose fiber composite has an average aspect ratio of 1 or more and 100 or less.

**2.** The fine cellulose fiber composite according to claim 1, wherein a compound having the modifying group is bound via an ionic bond and/or a covalent bond to a carboxy group of the fine cellulose fibers.

**3.** The fine cellulose fiber composite according to claim 1 or 2, wherein the fine cellulose fibers are a processed product obtained by subjecting cellulose fibers to at least one of the treatments selected from biochemical treatments, chemical treatments, and mechanical treatments.

**4.** The fine cellulose fiber composite according to claim 3, wherein the chemical treatment is an acid hydrolysis treatment.

**5.** The fine cellulose fiber composite according to any one of claims 1 to 4, wherein the number of kinds of modifying groups bound to a carboxy group of the fine cellulose fibers is two or more.

**6.** The fine cellulose fiber composite according to any one of claims 1 to 5, wherein the carboxy group content of the fine cellulose fibers is 0.4 mmol/g or more.

**7.** The fine cellulose fiber composite according to any one of claims 1 to 6, wherein the carboxy group content of the fine cellulose fibers is 2 mmol/g or less.

**8.** The fine cellulose fiber composite according to any one of claims 1 to 7, wherein the average fiber diameter of the fine cellulose fiber composite is 20 nm or less.

**9.** The fine cellulose fiber composite according to any one of claims 1 to 8, wherein the length (average fiber length) of the fine cellulose fiber composite is 500 nm or less.

**10.** A resin composition comprising a resin and a fine cellulose fiber composite as defined in any one of claims 1 to 9.

**11.** The resin composition according to claim 10, wherein the content of the resin in the resin composition is 50% by mass or more and 99% by mass or less.

**12.** The resin composition according to claim 10 or 11, wherein the content of the fine cellulose fiber composite in the resin composition is 0.1% by mass or more and 50% by mass or less.

**13.** The resin composition according to any one of claims 10 to 12, further comprising one or more components selected from the group consisting of a plasticizer, a crystal nucleating agent, a filler, a hydrolysis inhibitor, a flame retardant, an antioxidant, a hydrocarbon wax, a lubricant, an ultraviolet absorbent, an antistatic agent, an anti-clouding agent, a photo stabilizer, a pigment, a mildewproof agent, a bactericidal agent, a blowing agent, a surfactant, a polysaccharide, a natural protein, tannin, an inorganic compound, a perfume, a fluidity modulator, a leveling agent, an

electroconductive agent, a ultraviolet dispersant, and a deodorant.

14. A resin molded article obtainable by applying extrusion molding, injection molding, press molding, casting molding or solvent casting to a resin composition as defined in any one of claims 10 to 13.

15. The resin molded article according to claim 14, wherein the resin molded article is a sheet-like form having a thickness of 0.01 mm or more and 1.5 mm or less.

## Patentansprüche

1. Verbundmaterial aus feinen Cellulosefasern, in welchem eine modifizierende Gruppe an eine Carboxygruppe der feinen Cellulosefasern gebunden ist, wobei die modifizierende Gruppe eine Kohlenwasserstoffgruppe und/oder eine Copolymereinheit ist,
wobei die feinen Cellulosefasern einen Carboxygruppengehalt von 0,1 mmol/g oder mehr aufweisen, wobei das Verbundmaterial aus feinen Cellulosefasern ein durchschnittliches Seitenverhältnis von 1 oder mehr und 100 oder weniger aufweist.

2. Verbundmaterial aus feinen Cellulosefasern gemäß Anspruch 1, wobei eine Verbindung mit der modifizierenden Gruppe über eine ionische Bindung und/oder eine kovalente Bindung an die Carboxygruppe der feinen Cellulosefasern gebunden ist.

3. Verbundmaterial aus feinen Cellulosefasern gemäß Anspruch 1 oder 2, wobei die feinen Cellulosefasern ein behandeltes Produkt sind, das erhalten wird, indem die Cellulosefasern mindestens einer der Behandlungen ausgewählt aus biochemischen Behandlungen, chemischen Behandlungen und mechanischen Behandlungen unterzogen werden.

4. Verbundmaterial aus feinen Cellulosefasern gemäß Anspruch 3, wobei die chemische Behandlung eine Säurehydrolysebehandlung ist.

5. Verbundmaterial aus feinen Cellulosefasern gemäß einem der Ansprüche 1 bis 4, wobei die Anzahl der Arten modifizierender Gruppen, die an eine Carboxygruppe der feinen Cellulosefasern gebunden sind, zwei oder mehr beträgt.

6. Verbundmaterial aus feinen Cellulosefasern gemäß einem der Ansprüche 1 bis 5, wobei der Carboxygruppengehalt der feinen Cellulosefasern 0,4 mmol/g oder mehr beträgt.

7. Verbundmaterial aus feinen Cellulosefasern gemäß einem der Ansprüche 1 bis 6, wobei der Carboxygruppengehalt der feinen Cellulosefasern 2 mmol/g oder weniger beträgt.

8. Verbundmaterial aus feinen Cellulosefasern gemäß einem der Ansprüche 1 bis 7, wobei der durchschnittliche Faserdurchmesser des Verbundmaterials aus feinen Cellulosefasern 20 nm oder weniger beträgt.

9. Verbundmaterial aus feinen Cellulosefasern gemäß einem der Ansprüche 1 bis 8, wobei die Länge (durchschnittliche Faserlänge) des Verbundmaterials aus feinen Cellulosefasern 500 nm oder weniger beträgt.

10. Harzzusammensetzung, umfassend ein Harz und ein Verbundmaterial aus feinen Cellulosefasern wie in einem der Ansprüche 1 bis 9 definiert.

11. Harzzusammensetzung gemäß Anspruch 10, wobei der Gehalt des Harzes in der Harzzusammensetzung 50 Massen-% oder mehr und 99 Massen-% oder weniger beträgt.

12. Harzzusammensetzung gemäß Anspruch 10 oder 11, wobei der Gehalt des Verbundmaterials aus feinen Cellulosefasern in der Harzzusammensetzung 0,1 Massen-% oder mehr und 50 Massen-% oder weniger beträgt.

13. Harzzusammensetzung gemäß einem der Ansprüche 10 bis 12, ferner umfassend eine oder mehrere Komponenten ausgewählt aus der Gruppe bestehend aus einem Weichmacher, einem Kristallkeimbildner, einem Füllstoff, einem Hydrolyse-Inhibitor, einem Flammschutzmittel, einem Antioxidationsmittel, einem Kohlenwasserstoffwachs, einem

Schmiermittel, einem Ultraviolett-Absorptionsmittel, einem antistatischen Mittel, einem Anti-Trübungsmittel, einem Photostabilisator, einem Pigment, einem Schimmelschutzmittel, einem bakteriziden Mittel, einem Treibmittel, einem Tensid, einem Polysaccharid, einem natürlichen Protein, Tannin, einer anorganischen Verbindung, einem Parfüm, einem Fließfähigkeitsmodulator, einem Egalisiermittel, einem elektrisch leitenden Mittel, einem UV-Dispersionsmittel und einem Deodorant.

**14.** Harzformkörper, erhältlich durch Anwenden von Extrusionsformen, Spritzgießen, Pressformen, Gießen oder Lösungsmittelgießen auf eine Harzzusammensetzung, wie in einem der Ansprüche 10 bis 13 definiert.

**15.** Harzformkörper gemäß Anspruch 14, wobei der Harzformkörper eine blattartige Form mit einer Dicke von 0,01 mm oder mehr und 1,5 mm oder weniger ist.

## Revendications

**1.** Composite de fines fibres de cellulose dans lequel un groupe de modification est lié à un groupe carboxy de fines fibres cellulosiques, dans lequel le groupe de modification est un groupe hydrocarboné et/ou une fraction copolymère, dans lequel les fines fibres de cellulose présentant une teneur en groupe carboxy de 0,1 mmol/g ou plus, dans lequel le composite de fines fibres de cellulose présente un rapport d'aspect moyen de 1 ou plus et de 100 ou moins.

**2.** Composite de fines fibres de cellulose selon la revendication 1, dans lequel un composé présentant le groupe de modification est lié par le biais d'une liaison ionique et/ou d'une liaison covalente à un groupe carboxy des fines fibres de cellulose.

**3.** Composite de fines fibres de cellulose selon la revendication 1 ou 2, dans lequel les fines fibres de cellulose sont un produit traité obtenu en soumettant des fibres de cellulose à au moins l'un des traitements sélectionnés parmi des traitements biochimiques, des traitements chimiques et des traitements mécaniques.

**4.** Composite de fines fibres de cellulose selon la revendication 3, dans lequel le traitement chimique est un traitement d'hydrolyse acide.

**5.** Composite de fines fibres de cellulose selon l'une quelconque des revendications 1 à 4, dans lequel le nombre de types de groupes de modification liés à un groupe carboxy des fines fibres de cellulose est deux ou plus.

**6.** Composite de fines fibres de cellulose selon l'une quelconque des revendications 1 à 5, dans lequel la teneur en groupe carboxy des fines fibres de cellulose est 0,4 mmol/g ou plus.

**7.** Composite de fines fibres de cellulose selon l'une quelconque des revendications 1 à 6, dans lequel la teneur en groupe carboxy des fines fibres de cellulose est 2 mmol/g ou moins.

**8.** Composite de fines fibres de cellulose selon l'une quelconque des revendications 1 à 7, dans lequel le diamètre de fibre moyen du composite de fines fibres de cellulose est 20 nm ou moins.

**9.** Composite de fines fibres de cellulose selon l'une quelconque des revendications 1 à 8, dans lequel la longueur (longueur de fibre moyenne) du composite de fines fibres de cellulose est 500 nm ou moins.

**10.** Composition de résine comprenant une résine et un composite de fines fibres de cellulose tel que défini dans l'une quelconque des revendications 1 à 9.

**11.** Composition de résine selon la revendication 10, dans laquelle la teneur de la résine dans la composition de résine est 50 % en masse ou plus et 99 % en masse ou moins.

**12.** Composition de résine selon la revendication 10 ou 11, dans laquelle la teneur du composite de fines fibres de cellulose dans la composition de résine est 0,1 % en masse ou plus et 50 % en masse ou moins.

**13.** Composition de résine selon l'une quelconque des revendications 10 à 12, comprenant en outre un ou plusieurs composés sélectionnés dans le groupe constitué par un plastifiant, un agent de nucléation de cristaux, une charge, un inhibiteur d'hydrolyse, un retardateur de flamme, un antioxydant, une cire d'hydrocarbure, un lubrifiant, un absorbeur d'ultraviolet, un agent antistatique, un agent anti-buée, un photo-stabilisant, un pigment, un agent résistant à la moisissure un agent bactéricide, un agent gonflant, un tensioactif, un polysaccharide, une protéine naturelle, un tanin, un composé inorganique, un parfum, un modulateur de fluidité, un agent d'unisson, un agent électroconducteur, un dispersant d'ultraviolet et un déodorant.

**14.** Article moulé en résine pouvant être obtenu en appliquant un moulage par extrusion, un moulage par injection, un moulage à la presse, un moulage par coulée ou une coulée au solvant à une composition de résine telle que définie dans l'une quelconque des revendications 10 à 13.

**15.** Article moulé en résine selon la revendication 14, dans lequel l'article moulé en résine est une forme semblable à une feuille présentant une épaisseur de 0,01 mm ou plus et 1,5 mm ou moins.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011140738 A
- EP 3088422 A
- EP 2799491 A
- EP 2511346 A
- JP 2013151661 A
- JP HEI3181448 A
- JP 2011140632 A
- JP 2015143336 A
- JP 2015143337 A
- JP 2008174718 A
- JP 2008115372 A


### Non-patent literature cited in the description


- **GOSEI KAGAKU ; SHIRIZU PEPUCHIDO GOSEI.** Synthetic Chemistry Series Peptide Synthesis. Maruzen Publishing, 116
- *Tetrahedron,* 2001, vol. 57, 1551